# EUROPÄISCHE PATENTSCHRIFT

(11) **EP 3 145 941 B1**
(45) Veröffentlichungstag und Bekanntmachung des Hinweises auf die Patenterteilung: **18.12.2019**
(21) Anmeldenummer: 15721626.8
(22) Anmeldetag: 29.04.2015
(51) Int. Cl.: C07F 9/6574, C07F 9/145

(54) **VERFAHREN ZUR REDUZIERUNG DES CHLORGEHALTS VON ORGANOMONOPHOSPHITEN UNTER VERWENDUNG VON DIMETHYLAMINOBUTAN, TRIETHYLAMIN ODER TRIETHANOLAMIN**
METHOD FOR REDUCING THE CHLORINE CONTENT OF ORGANOMONOPHOSPHITES USING DIMETHYLAMINOBUTANE, TRIETHYLAMINE OR TRIETHANOLAMINE
PROCÉDÉ DE RÉDUCTION DE LA TENEUR EN CHLORE D'ORGANOMONOPHOSPHITES PAR UTILISATION DE DIMÉTHYLAMINOBUTANE, DE TRIÉTHYLAMINE OU DE TRIÉTHANOLAMINE

(30) Priorität: 20.05.2014 DE 102014209534; 20.05.2014 DE 102014209532; 20.05.2014 DE 102014209533; 20.05.2014 DE 102014209535; 20.05.2014 DE 102014209536; 16.02.2015 DE 102015202722
(43) Veröffentlichungstag der Anmeldung: 29.03.2017
(73) Patentinhaber: Evonik Operations GmbH, 45128 Essen (DE)
(72) Erfinder: DYBALLA, Katrin Marie, 45657 Recklinghausen (DE); FRANKE, Robert, 45772 Marl (DE)
(74) Vertreter: Evonik Patent Association
(86) Internationale Anmeldenummer: PCT/EP2015/059290
(87) Internationale Veröffentlichungsnummer: WO 2015/176929

(56) Entgegenhaltungen:
- WO-A1-01/21579
- WO-A1-2013/098368
- ROBERT FRANKE ET AL: "Applied Hydroformylation", CHEMICAL REVIEWS, Bd. 112, Nr. 11, 14. November 2012 (2012-11-14), Seiten 5675-5732, XP055091930, ISSN: 0009-2665, DOI: 10.1021/cr3001803
- MANFRED T. REETZ ET AL: "Helical Triskelion Monophosphites as Ligands in Asymmetric Catalysis", JOURNAL OF THE AMERICAN CHEMICAL SOCIETY, Bd. 131, Nr. 11, 25. März 2009 (2009-03-25), Seiten 4136-4142, XP055200386, ISSN: 0002-7863, DOI: 10.1021/ja809297a
- SAKUMA T ET AL: "Kinetic resolution of phosphoryl and sulfonyl esters of 1,1'-bi-2-naphthol via Pd-catalyzed alcoholysis of their vinyl ethers", TETRAHEDRON ASYMMETRY, PERGAMON PRESS LTD, OXFORD, GB, Bd. 19, Nr. 13, 11. Juli 2008 (2008-07-11) , Seiten 1593-1599, XP023172276, ISSN: 0957-4166, DOI: 10.1016/J.TETASY.2008.06.034 [gefunden am 2008-07-16]

## Beschreibung

Die Erfindung betrifft ein universell einsetzbares Verfahren zur Reduzierung des Chlorgehalts von Organomonophosphiten unter Verwendung von Dimethylaminobutan oder Triethylamin.

Organophosphorverbindungen haben wegen ihres breiten Anwendungsbereiches eine erhebliche industrielle Bedeutung erlangt. Sie werden unmittelbar als Weichmacher, Flammschutzmittel, UV-Stabilisatoren oder als Antioxidantien eingesetzt. Darüber hinaus stellen sie wichtige Zwischenprodukte bei der Herstellung von Fungiziden, Herbiziden, Insektiziden und Pharmazeutika dar.

Ein spezielles Anwendungsgebiet der Organophosphorverbindungen ist die Katalyse:
So werden insbesondere Phosphine, Phosphite und Phosphoramidite als Liganden in Katalysatorkomplexen verwendet, die wiederum zur homogenen Katalyse von großindustriell betriebenen Prozessen verwendet werden. Dabei ist insbesondere die Hydroformylierung von ungesättigten Verbindungen mit Kohlenmonoxid und Wasserstoff zu nennen, die in der Regel in Gegenwart eines homogenen Katalysatorsystems erfolgt, welches ein Metall sowie mindestens eine Organophosphorverbindung als Ligand aufweist.

Eine Einführung in die homogen katalysierte Hydroformylierung bieten: B. CORNILS, W. A. HERRMANN: Applied Homogeneous Catalysis with Organometallic Compounds. Vol. 1 & 2, VCH, Weinheim, New York, 1996; R. Franke, D. Selent, A. Börner: Applied Hydroformylation. Chem. Rev., 2012, DOI:10.1021/cr3001803

Die Synthese phosphorhaltiger Liganden ist in der Literatur mehrfach beschrieben. Einen guten Überblick findet man in: "Phosphorous(III) Ligands in Homogeneous Catalysis - Design and Synthesis" von Paul C.J. Kamer und Piet W.N.M. van Leeuwen; John Wiley and Sons, 2012.

Bei der Synthese dieser Liganden werden häufig chlorhaltige Reagenzien verwendet. So wird bei der Synthese von Phosphitliganden meist Phosphortrichlorid (PCl₃) eingesetzt.

Die bei der Herstellung von Organophosphorverbindungen eingesetzten Chlorverbindungen bereiten bei der bestimmungsgemäßen Verwendung bzw. Weiterverarbeitung der Organophosphorverbindung vielerlei Schwierigkeiten:
So wird die gewünschte Organophosphorverbindung niemals sofort rein, sondern stets verunreinigt als ein Organophosphorprodukt erhalten, welches neben der gewünschten Organophosphorverbindung auch Verunreinigungen enthält. Bei den Verunreinigungen handelt es sich um nicht oder unvollständig umgesetzte Reagenzien, um Hilfsstoffe oder um Produkte aus Nebenreaktionen. Dabei bereiten insbesondere Verunreinigungen in Form von Chlorverbindungen Schwierigkeiten:
Gelangen die chlorhaltigen Verunreinigungen zusammen mit der als Ligand verwendeten Organophosphorverbindung in einen stählernen Druckreaktor, so ist dieser durch das Chlorid erhöhter Korrosion ausgesetzt. Dies gilt ganz besonders für kontinuierlich betriebene Prozesse, bei denen die Organophosphorverbindung im Laufe der Reaktion nachdosiert wird. Dies ist beispielsweise bei der Verwendung der Organophosphorverbindung als Ligand in der großtechnischen Hydroformylierung der Fall. Durch die Nachdosierung kommt es zwangsläufig auch zu einer Akkumulation der Nebenkomponenten im Reaktor. Dies ist insbesondere dann kritisch, wenn Chlorid eine der Nebenkomponenten darstellt, da Chlorid selbst rostfreie Stähle angreift (vgl. Merkblatt 893 "Edelstahl rostfrei für die Wasserwirtschaft", 1. Auflage 2007, Hrsg. Informationsstelle Edelstahl Rostfrei, Düsseldorf.)

Eine wichtige Klasse der Organophosphorverbindungen sind die Organomonophosphite oder kurz Monophospite genannt.

In der Hydroformylierung spielen diese eine herausragende Rolle (siehe R. Franke, D. Selent, A. Börner: Applied Hydroformylation. Chem. Rev., 2012, DOI:10.1021/cr3001803).

Der Chloridgehalt lässt sich analytisch einfach bestimmen; zum Beispiel durch wässrige Titration. Weitreichender ist die Bestimmung des Gesamtchlorgehalts, der neben den Chloriden auch anderweitig gebundenes Chlor umfasst. Ein Abstellen auf den Gesamtchlorgehalt ist auch insoweit sachdienlich, als nicht ausgeschlossen werden kann, dass auch anderweitig gebundenes Chlor den Reaktor zu schädigen vermag. Bei der Bemessung der Grenzwerte für Gesamtchlor bleibt aber der Chloridanteil maßgeblich.

In der Patentliteratur sind verschiedene Methoden zur Reduktion des Gesamtchlorgehalts von Organophosphor-Liganden in Anschluss an die eigentliche Synthese bekannt.

Die WO 2013/098368 A1 beschreibt die Aufreinigung von Organodiphosphiten, wobei die zu entfernenden Verunreinigungen nicht nur Chloridionen, sondern vor allem Diole, basische Verunreinigungen, Mono- und Dioxide sowie sekundäre Organophosphite umfassen. Wegen des unterschiedlichen strukturellen Aufbaus und des damit verbundenen unterschiedlichen chemischen und physikalischen Eigenschaften wie Löslichkeiten von Monophosphiten und Diphosphiten ist das in dieser älteren Schrift beschriebene Aufreinigungsverfahren nicht auf die Aufreinigung von Organomonophosphiten übertragbar.

In DE 10 2011 002 640 A1 wird ein Verfahren zur Aufreinigung von Biphephos, einem Bisphosphit, (6,6'-[(3,3'-Di-tert-butyl-5,5'-dimethoxy-1,1'-biphenyl-2,2'diyl)bis(oxy)]bis(dibenzo[d,f][1,3,2] dioxaphosphepin)) beschrieben. Mit dem dort beschriebenen Verfahren soll der Chlorgehalt von Biphephos reduziert werden. Dies erfolgt dadurch, dass das Biphephos mit einem Lösungsmittel ausgewählt aus Ethylacetat, Anisol, ortho-Xylol, Toluol, Aceton, 2-Propanol und C₅-C₁₀-Alkanen ausgewaschen oder aus einem solchen Lösungsmittel umkristallisiert wird. Hierbei ist jedoch die lange Zeit, die zum Ausfallen bzw. Auskristallisieren des Produktes notwendig ist, verbesserungswürdig. Das Ausfallen des Liganden erfolgt über Nacht, also benötigt man > 8 Stunden. Ferner wird in den Beispielen darauf verwiesen, dass im Anschluss an die Fällung über Nacht erneut ein Lösungsmittel zugegeben werden muss, um die Ausfällung zu komplementieren (Beispiel 2 von DE 10 2011 002 640 A1). Diese langen Reaktionszeiten sind bei großtechnischen Synthesen problematisch, da lange Verweilzeiten und damit letztlich lange Produktionszeiten für den Liganden zu einer Verteuerung desselbigen führen.

Die Schrift EP 0 285 136 beansprucht ein Verfahren zur Reinigung von tertiären Organophosphiten von fünfwertigen Organophosphor-Verbindungen, die als Nebenprodukte der Synthese oder auch als Abbau- bzw. Hydrolyseprodukte der tertiären Organophosphite entstehen. Das Verfahren sieht eine Behandlung des gelösten verunreinigten Organophosphits mit Wasser bei erhöhter Temperatur in Gegenwart einer Lewis-Base vor. Als Lewis-Basen werden anorganische Salze (Carbonate, Hydroxide, Oxide), tertiäre Amine und Polymere, die Amin-Gruppen tragen, eingesetzt. Ein Nachteil des in EP 0 285 136 beschriebenen Verfahrens liegt in der Behandlung mit Wasser. Nicht nur die zu entfernenden Verunreinigungen, sondern auch die tertiären Organophosphite selbst reagieren unter den genannten Bedingungen, so dass, je nach Hydrolysestabilität der Organophosphite, ein Teil des Wertprodukts verloren geht. Dies ist hierbei besonders kritisch, da mit Wasser gewaschen wird, also in hohen Konzentrationen eingesetzt wird.

Die Schrift DE 10 2004 049 339 beschreibt ein Verfahren zur Reinigung von phosphorhaltigen Chelatliganden mittels Extraktion unter Verwendung eines polaren Extraktionsmittels. Der Rohligand wurde hierbei sechsmal mit einem polaren Lösungsmittel extrahiert und weist im Anschluss einen Gehalt an Aminbase, Aminhydrochlorid oder deren Gemischen von weniger als 100 ppm auf. Bei dieser Art der Aufreinigung sind jedoch enorme Mengen an Lösungsmittel notwendig, was aus ökonomischer und ökologischer Sicht verbesserungswürdig ist.

In WO 01/21579 A1 wird ein Verfahren zur Hydrocyanierung beschrieben. Hierbei kommen multidentate Phosphit-Liganden zum Einsatz.

In WO 2013/098368 A1 wird ein Verfahren zur Reinigung von organischen Diphosphitverbindungen beschrieben. Das rohe organische Diphosphit wird hierbei zumindest teilweise in einem ersten Lösungsmittel gelöst und durch Versetzung mit einem zweiten Lösungsmittel ausgefällt.

Aufgabe der vorliegenden Erfindung war es nun, ein Aufreinigungsverfahren für Organomonophosphite zu entwickeln, bei dem der Chlorgehalt reduziert wird, ohne dass dieses Verfahren die zuvor beschriebenen Nachteile aufweist.

Insbesondere bestand die Aufgabe darin, mit dem Verfahren Organomonophosphite mit einem Chlorgehalt von mehr als 1.000 ppm bis 100.000 ppm und insbesondere von 5.000 ppm bis 100.000 ppm im Organomonophosphit auf einen Chlorgehalt von weniger als 1.000 ppm im Organomonophosphit aufzureinigen. Vorzugsweise sollte der Chlorgehalt auf weniger als 500 ppm im Organomonophosphit, und besonders bevorzugt auf weniger als 200 ppm im Organomonophosphit reduziert werden. Die angegebenen Chlorgehalte verstehen sich als Gesamtchlorgehalte.

Der Gesamtchlorgehalt wird nach Wickbold bestimmt: Probenvorbereitung nach DIN 51408 und Messung per lonenchromatographie nach DIN EN ISO 10304.

Das verunreinigte Organomonophosphit kann organische Chloride und/oder anorganische Chloride enthalten. Organische Chloride enthalten mindestens ein Kohlenstoffatom, währenddessen anorganische Chloride kein Kohlenstoff aufweisen. Verschmutzungen des Organophosphorprodukts durch die folgenden Chloride sind besonders wahrscheinlich, da diese chlorhaltigen Verbindungen entweder bei der Synthese von Organophosphorverbindungen benötigt werden oder als Nebenprodukte unvermeidlich anfallen: Phosphortrichlorid, Chlorophosphite, Dichlorophosphite, Hydrochloride von Aminen, Hydrochloride von Alkalimetallen, Chloride von Erdalkalimetallen, chlorhaltige Säuren erhältlich aus der Hydrolyse von Phosphortrichlorid. Deshalb weist das verunreinigte Organomonophosphit in der Regel mindestens eines der aufgezählten Chloride auf.

Gelöst wird diese Aufgabe durch ein Verfahren gemäß Anspruch 1.

Verfahren zur Reduktion des Chlorgehalts in einem Organomonophosphit einer der allgemeinen Formeln **I, II, III, IV, V, VI, VII, VIII, IX** oder **X**: 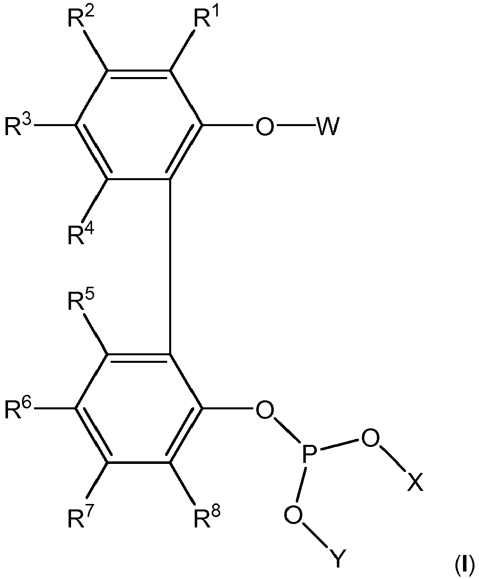 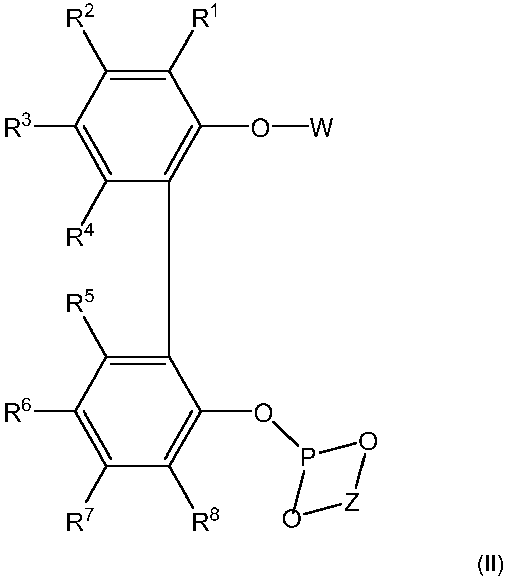 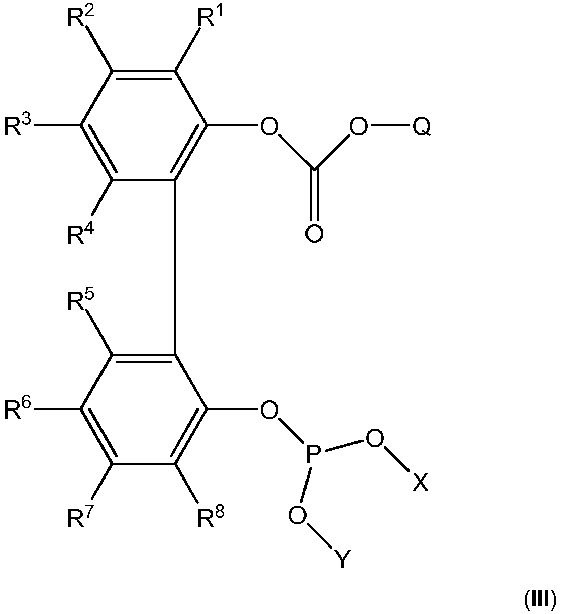 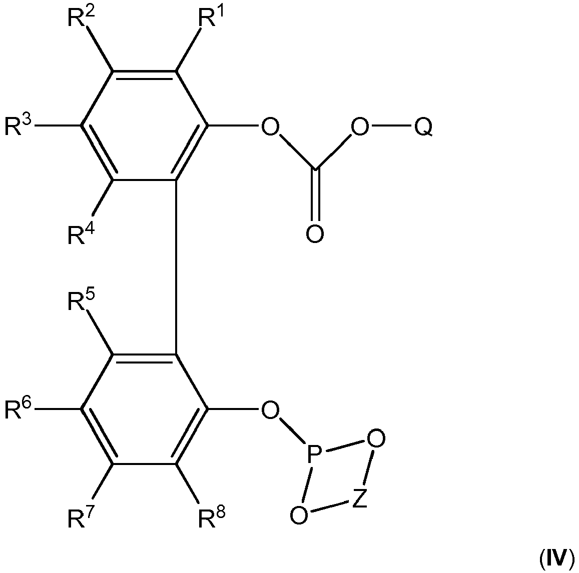 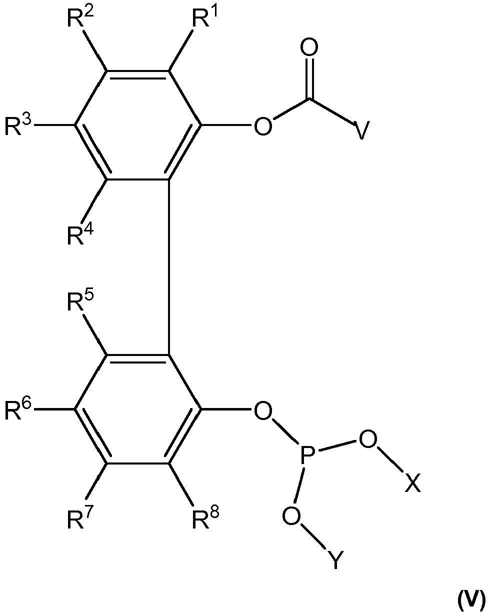 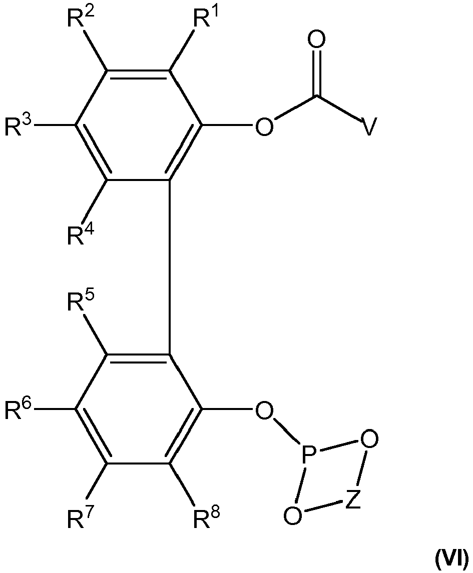 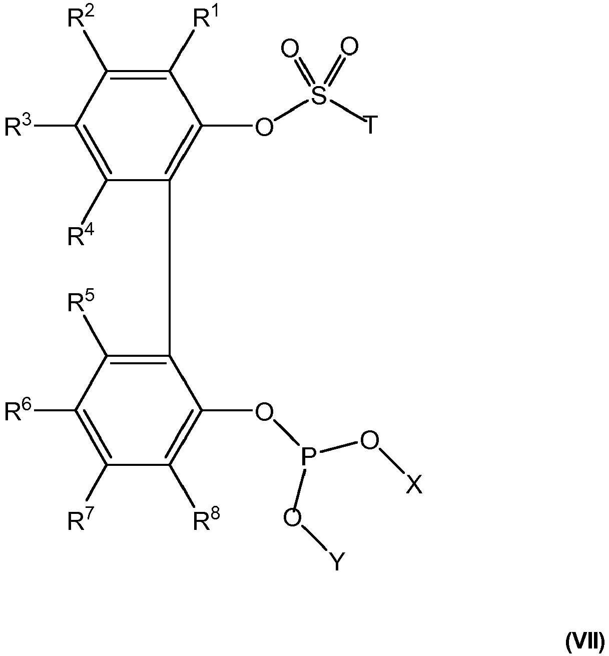 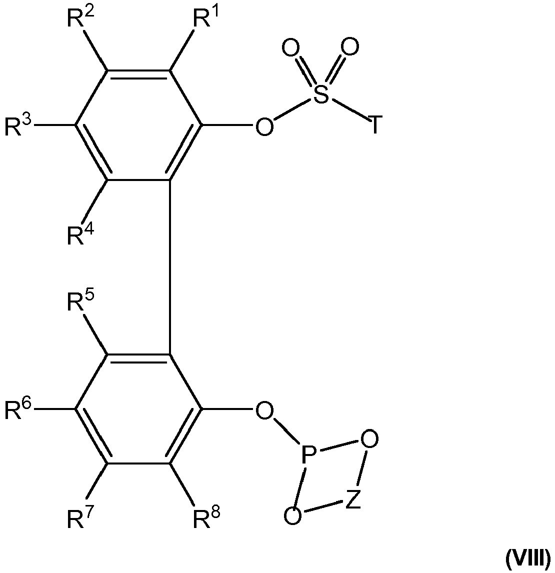 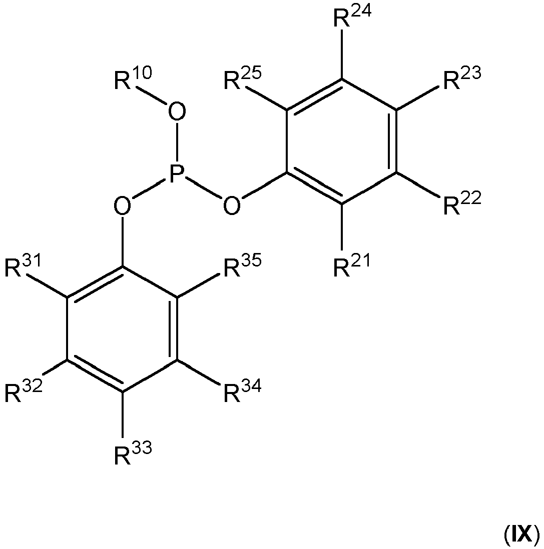 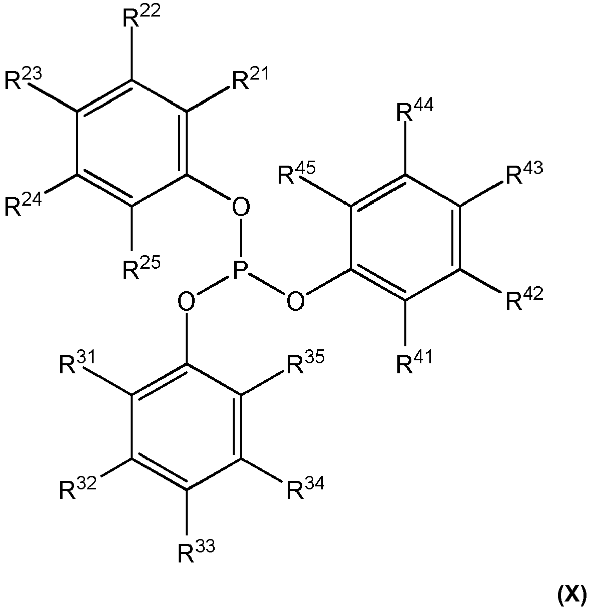 wobei die Reste R¹, R², R³, R⁴, R⁵, R⁶, R⁷, R⁸, R²¹, R²², R²³, R²⁴, R²⁵, R³¹, R³², R³³, R³⁴, R³⁵, R⁴¹, R⁴², R⁴³, R4⁴, R⁴⁵ jeweils unabhängig voneinander ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl;
und R¹⁰ für-(C₁-C₁₂)-Alkyl steht;
und T ausgewählt ist aus:
   -CH₃, -CF₃, -CH₂C₆H₅;
und Q ausgewählt ist aus:
   -(C₁-C₁₂)-Alkyl-, -C(CH₃)₃;
und V ausgewählt ist aus:
   -CH₂CH₂COCH₃, -C(CH₃)₃, -C₆H₅;
und W ausgewählt ist aus:
   -Me, -CH₂CH₃, -CH₂CH₂CH₃, -CH₂-*cyclo*-C₃H₅, -CH(CH₃)₂, -*cyclo*-C₆H₁₁, -C(CH₃)₃, -CH₂C₆H₅,-CH₂C₆H₃-2,4-(CH₃)₂;
und X und Y jeweils unabhängig voneinander ausgewählt sind aus:
   -(C₁-C₁₂)-Alkyl, -(C₆-C₂₀)-Aryl, -(C₆-C₂₀)-Aryl-(C₁-C₁₂)-Alkyl, -(C₁-C₁₂)-Alkyl-(C₆-C₂₀)-Aryl;
und Z ausgewählt ist aus:
   -(C₁-C₁₂)-Alkyl-, -(C₆-C₂₀)-Aryl-, -(C₆-C₂₀)-Aryl-(C₆-C₂₀)-Aryl-;
und die genannten Alkyl-, Cycloalkyl-, Aryl- und substituiert sein können;
umfassend die Verfahrensschritte:
   a) teilweises oder vollständiges Auflösen des Organomonophosphits in einer ersten Lösung, welche ein erstes Lösungsmittel umfasst, das ausgewählt ist aus Aromaten, Alkoholen, Aceton, Ethylacetat, Acetonitril, Ether, Wasser;
      wobei die erste Lösung Dimethylaminobutan oder Triethylamin oder Triethanolamin umfasst;
   c) das aufgereinigte Organomonophosphit ausgefällt wird.

Durch das Dimethylaminobutan, Triethylamin bzw. Triethanolamin, werden unerwünschte Nebenreaktionen, wie z.B. eine Alkoholyse oder eine Umesterung, unterdrückt. Ein weiterer Vorteil ist, dass sich das ursprünglich im Monophosphit enthaltene gebundene Chlor durch das in der Lösung vorhandene Dimethylaminobutan besser in der Lösung löst.

(C₁-C₁₂)-Alkyl und O-(C₁-C₁₂)-Alkyl können jeweils unsubstituiert oder durch einen oder mehrere gleiche oder verschiedene Reste substituiert sein, die ausgewählt sind unter (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

(C₃-C₁₂)-Cycloalkyl und (C₃-C₁₂)-Heterocycloalkyl können jeweils unsubstituiert oder durch einen oder mehrere gleiche oder verschiedene Reste substituiert sein, die ausgewählt sind unter (C₁-C₁₂)-Alkyl, (C₁-C₁₂)-Alkoxy, (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

(C₆-C₂₀)-Aryl können jeweils unsubstituiert oder durch einen oder mehrere gleiche oder verschiedene Reste substituiert sein, die ausgewählt sind unter (C₁-C₁₂)-Alkyl, (C₁-C₁₂)-Alkoxy, (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

Im Rahmen der Erfindung umfasst der Ausdruck -(C₁-C₁₂)-Alkyl geradkettige und verzweigte Alkylgruppen. Vorzugsweise handelt es sich dabei um unsubstituierte geradkettige oder verzweigte -(C₁-C₈)-Alkyl- und ganz bevorzugt -(C₁-C₆)-Alkylgruppen. Beispiele für -(C₁-C₁₂)-Alkylgruppen sind insbesondere Methyl, Ethyl, Propyl, Isopropyl, n-Butyl, iso-Butyl, sec.-Butyl, tert.-Butyl, n-Pentyl, 2-Pentyl, 2-Methylbutyl-, 3-Methylbutyl-, 1,2-Dimethylpropyl-, 1,1-Dimethylpropyl, 2,2-Dimethylpropyl-, 1-Ethylpropyl-, n-Hexyl-, 2-Hexyl-, 2-Methylpentyl-, 3-Methylpentyl-, 4-Methylpentyl-, 1,1-Dimethylbutyl-, 1,2-Dimethylbutyl-, 2,2-Dimethylbutyl-, 1,3-Dimethylbutyl-, 2,3-Dimethylbutyl-, 3,3-Dimethylbutyl-, 1,1,2-Trimethylpropyl-, 1,2,2-Trimethylpropyl-, 1-Ethylbutyl-, 1-Ethyl-2-methylpropyl-, n-Heptyl-, 2-Heptyl-, 3-Heptyl-, 2-Ethylpentyl-, 1-Propylbutyl-, n-Octyl-, 2-Ethylhexyl-, 2-Propylheptyl-, Nonyl-, Decyl.

Die Erläuterungen zum Ausdruck -(C₁-C₁₂)-Alkyl gelten auch für die Alkylgruppen in -O-(C₁-C₁₂)-Alkyl, also in -(C₁-C₁₂)-Alkoxy. Vorzugsweise handelt es sich dabei um unsubstituierte geradkettige oder verzweigte -(C₁-C₆)-Alkoxygruppen.

Substituierte -(C₁-C₁₂)-Alkylgruppen und substituierte -(C₁-C₁₂)-Alkoxygruppen können in Abhängigkeit von ihrer Kettenlänge einen oder mehrere Substituenten aufweisen. Die Substituenten sind vorzugsweise unabhängig voneinander ausgewählt unter -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

Der Ausdruck -(C₃-C₁₂)-Cycloalkyl umfasst im Sinne der vorliegenden Erfindung mono-, bi- oder tricyclische Kohlenwasserstoffreste mit 3 bis 12, insbesondere 5 bis 12 Kohlenstoffatomen. Dazu zählen Cyclopropyl-, Cyclobutyl-, Cyclopentyl-, Cyclohexyl-, Cycloheptyl-, Cyclooctyl-, Cyclododecyl-, Cyclopentadecyl-, Norbonyl- oder Adamantyl.

Der Ausdruck -(C₃-C₁₂)-Heterocycloalkylgruppen umfasst im Sinne der vorliegenden Erfindung nichtaromatische, gesättigte oder teilweise ungesättigte cycloaliphatische Gruppen mit 3 bis 12, insbesondere 5 bis 12, Kohlenstoffatomen. Die -(C₃-C₁₂)-Heterocycloalkylgruppen weisen vorzugsweise 3 bis 8, besonders bevorzugt 5 oder 6, Ringatome auf. In den Heterocycloalkylgruppen sind im Unterschied zu den Cycloalkylgruppen 1, 2, 3 oder 4 der Ringkohlenstoffatome durch Heteroatome oder heteroatomhaltige Gruppen ersetzt. Die Heteroatome oder die heteroatomhaltige Gruppen sind vorzugsweise ausgewählt unter -O-, -S-, -N-, -N(=O)-, -C(=O)- oder -S(=O)-. Beispiele für -(C₃-C₁₂)-Heterocycloalkylgruppen Tetrahydrothiophenyl, Tetrahydrofuryl, Tetrahydropyranyl und Dioxanyl.

Substituierte -(C₃-C₁₂)-Cycloalkylgruppen und substituierte -(C₃-C₁₂)-Heterocycloalkylgruppen können, in Abhängigkeit von ihrer Ringgröße, einen oder mehrere (z.B. 1, 2, 3, 4 oder 5) weitere Substituenten aufweisen. Diese Substituenten sind vorzugsweise unabhängig voneinander ausgewählt unter -(C₁-C₁₂)-Alkyl, -(C₁-C₁₂)-Alkoxy, -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl. Substituierte -(C₃-C₁₂)-Cycloalkylgruppen tragen vorzugsweise eine oder mehrere -(C₁-C₆)-Alkylgruppen. Substituierte -(C₃-C₁₂)-Heterocycloalkylgruppen tragen vorzugsweise eine oder mehrere -(C₁-C₆)-Alkylgruppen.

Der Ausdruck -(C₆-C₂₀)-Aryl umfasst im Sinne der vorliegenden Erfindung mono- oder polycyclische aromatische Kohlenwasserstoffreste. Diese weisen 6 bis 20 Ringatome, besonders bevorzugt 6 bis 14 Ringatome, insbesondere 6 bis 10 Ringatome, auf. Aryl steht vorzugsweise für -(C₆-C₁₀)-Aryl. Aryl steht insbesondere für Phenyl, Naphthyl, Indenyl, Fluorenyl, Anthracenyl, Phenanthrenyl, Naphthacenyl, Chrysenyl, Pyrenyl, Coronenyl. Insbesondere steht Aryl für Phenyl, Naphthyl und Antracenyl.

Substituierte -(C₆-C₂₀)-Arylgruppen können, in Abhängigkeit von der Ringgröße, einen oder mehrere (z.B. 1, 2, 3, 4 oder 5) Substituenten aufweisen. Diese Substituenten sind vorzugsweise unabhängig voneinander ausgewählt unter -(C₁-C₁₂)-Alkyl, -(C₁-C₁₂)-Alkoxy, -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

Substituierte -(C₆-C₂₀)-Arylgruppen sind vorzugsweise substituierte -(C₆-C₁₀)-Arylgruppen, insbesondere substituiertes Phenyl oder substituiertes Naphthyl oder substituiertes Anthracenyl. Substituierte -(C₆-C₂₀)-Arylgruppen tragen vorzugsweise einen oder mehrere z.B. 1, 2, 3, 4 oder 5 Substituenten, ausgewählt unter -(C₁-C₁₂)-Alkylgruppen, -(C₁-C₁₂)-Alkoxygruppen.

In einer Variante des Verfahrens umfasst dieses den zusätzlichen Verfahrensschritt:
b) Einbringen der ersten Lösung in eine zweite Lösung, die ein zweites Lösungsmittel umfasst, das ausgewählt ist aus Aromaten, C₅-C₁₀-Alkanen, Alkoholen, Aceton, Ethylacetat, Acetonitril, Ether, Wasser.

In einer Variante des Verfahrens umfasst die erste Lösung Dimethylaminobutan.

In einer Variante des Verfahrens ist das erste Lösungsmittel ausgewählt aus: Ethylacetat, Anisol, ortho-Xylol, Toluol, Aceton, Methanol, Ethanol, Propanol, iso-Propanol, Acetonitril, Wasser.

Bevorzugt ist das erste Lösungsmittel ausgewählt aus: Ethylacetat, Anisol, ortho-Xylol, Toluol, Wasser.

Besonders bevorzugt ist das erste Lösungsmittel Toluol.

In einer Variante des Verfahrens ist das zweite Lösungsmittel ausgewählt aus:
Ethylacetat, Anisol, ortho-Xylol, Toluol, Aceton, Methanol, Ethanol, Propanol, iso-Propanol, Acetonitril, Tetrahydrofuran, Diethylether, Glykol, C₅-C₁₀-Alkanen, Wasser.

Bevorzugt ist das zweite Lösungsmittel ausgewählt aus: Ethylacetat, Aceton, Methanol, Ethanol, Propanol, iso-Propanol, Acetonitril, C₅-C₁₀-Alkanen.

Besonders bevorzugt ist das zweite Lösungsmittel Acetonitril.

In einer Variante des Verfahrens umfasst die zweite Lösung Dimethylaminobutan oder Triethylamin.

In einer Variante des Verfahrens umfasst die zweite Lösung Dimethylaminobutan.

In einer Variante des Verfahrens wird im Verfahrensschritt a) das Organomonophosphit vollständig in der ersten Lösung aufgelöst.

In einer Variante des Verfahrens erfolgt das Einbringen im Verfahrensschritt b) mittels Eintropfen.

In einer anderen Variante des Verfahrens erfolgt das Einbringen im Verfahrensschritt b) mittels Eindosierung.

In einer Variante des Verfahrens weist das Organomonophosphit beim Einbringen im Verfahrensschritt b) einen Chlorgehalt von 1.500 ppm bis 100.000 ppm auf.

Vorzugsweise weist das Organomonophosphit beim Einbringen im Verfahrensschritt b) einen Chlorgehalt von 5.000 ppm bis 100.000 ppm auf.

Die angegebenen Chlorgehalte verstehen sich als Gesamtchlorgehalte.

Der Gesamtchlorgehalt wird nach Wickbold bestimmt: Probenvorbereitung nach DIN 51408 und Messung per lonenchromatographie nach DIN EN ISO 10304.

In einer Variante des Verfahrens wird die zweite Lösung auf eine Temperatur in dem Bereich von -20°C bis 120 °C gebracht, bevor in Verfahrensschritt b) die erste Lösung in die zweite Lösung eingebracht wird. Dabei sollte die Temperatur des Lösungsmittels so gewählt werden, dass dieses nicht siedet. Die Temperatur hängt also von der Wahl des Lösungsmittels ab.

Vorzugsweise wird die zweite Lösung auf eine Temperatur in dem Bereich von -10 °C bis 80 °C gebracht, bevor in Verfahrensschritt b) die erste Lösung in die zweite Lösung eingebracht wird.

In einer Variante des Verfahrens weist das Organomonophosphit eine der allgemeinen Formeln **I, II, III** oder **IV** auf:

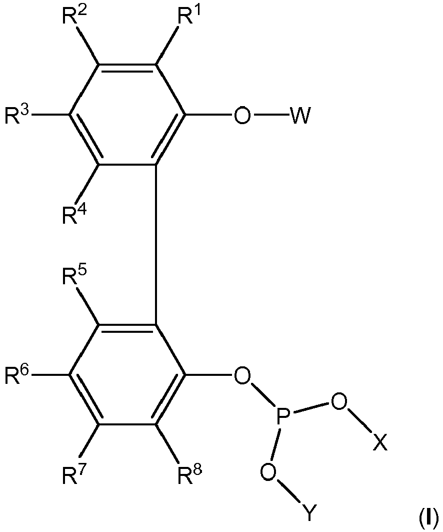

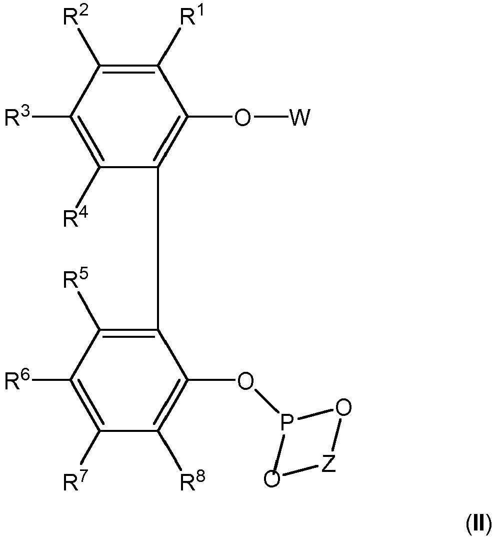

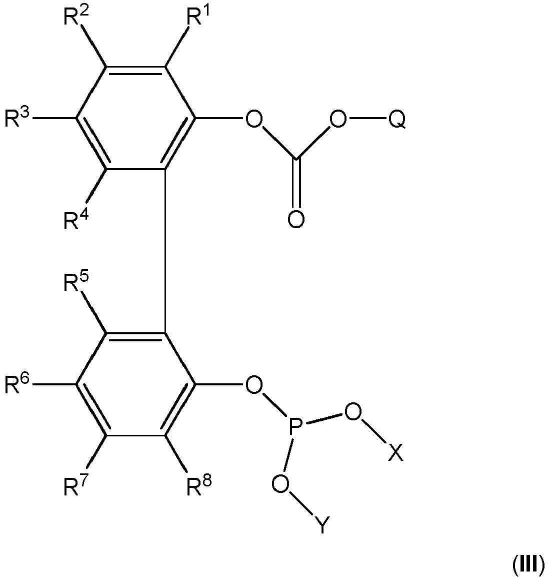

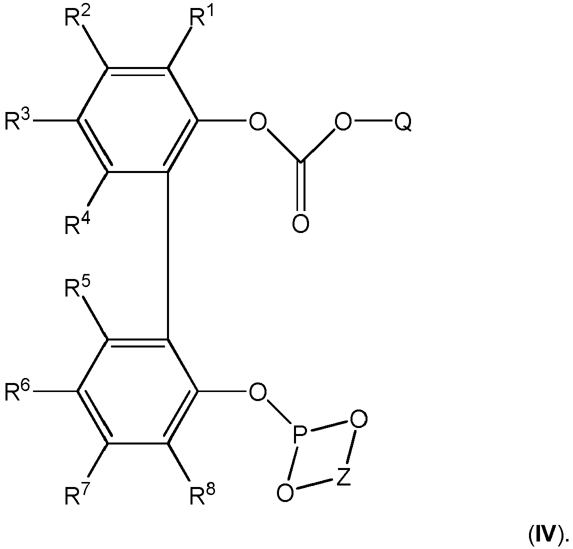

In einer Variante des Verfahrens sind R¹, R², R³, R⁴, R⁵, R⁶, R⁷, R⁸ jeweils unabhängig voneinander ausgewählt aus: -H, -(C₁-C₁₂)-Alkyl, -O-(C₁-C₁₂)-Alkyl, -O-(C₆-C₂₀)-Aryl, -(C₆-C₂₀)-Aryl;
und W für -CH₃ steht;
und Q für -C(CH₃)₃ steht.

In einer Variante des Verfahrens steht Z für:

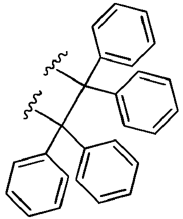

In einer Variante des Verfahrens steht Z für: 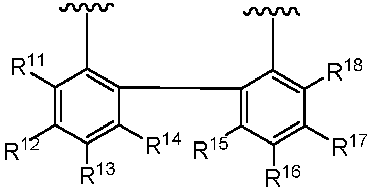 wobei R¹¹, R¹², R¹³, R¹⁴, R¹⁵, R¹⁶, R¹⁷, R¹⁸ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, -Halogen (wie Cl, F, Br, I), -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂.

In einer Variante des Verfahrens sind die Reste R¹¹, R¹², R¹³, R¹⁴, R¹⁵, R¹⁶, R¹⁷, R¹⁸ jeweils unabhängig voneinander ausgewählt aus:
-H, -(C₁-C₁₂)-Alkyl, -O-(C₁-C₁₂)-Alkyl, -O-(C₆-C₂₀)-Aryl, -(C₆-C₂₀)-Aryl, -Halogen (wie Cl, F, Br, I).

In einer Variante des Verfahrens sind die Reste R¹¹, R¹², R¹³, R¹⁴, R¹⁵, R¹⁶, R¹⁷, R¹⁸ jeweils unabhängig voneinander ausgewählt aus:
-H, -(C₁-C₁₂)-Alkyl, -O-(C₁-C₁₂)-Alkyl.

Besonders bevorzugt dient das erfindungsgemäße Verfahren zur Aufreinigung von Monophosphiten einer der Strukturformeln **XI, XII, XIII, XIV, XV** und **XVI:**

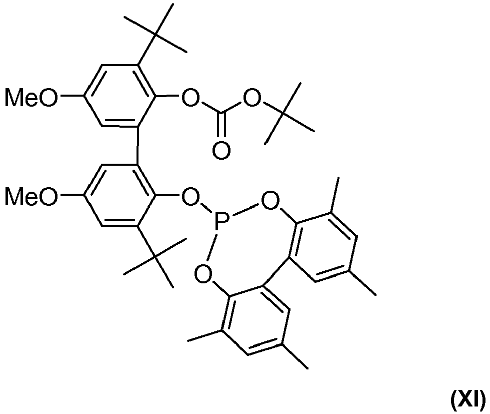

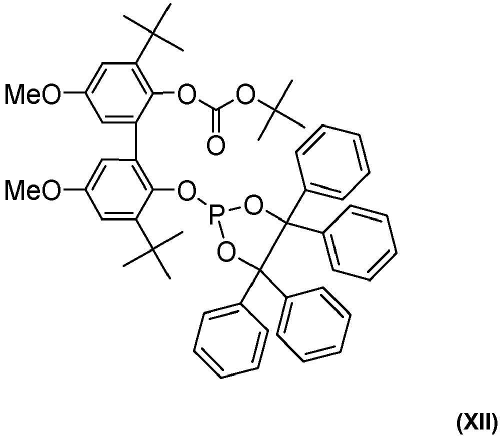

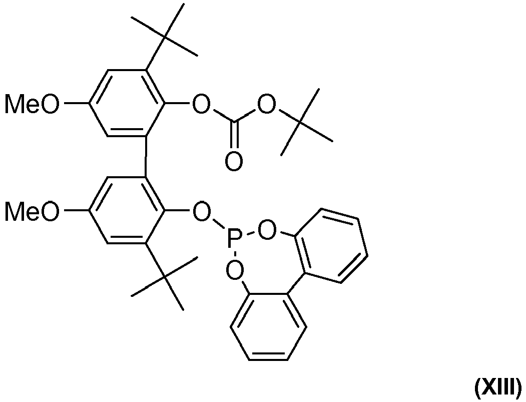

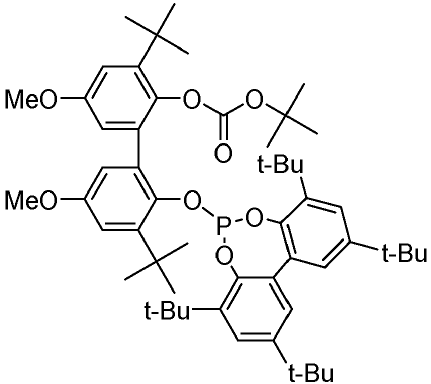

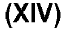

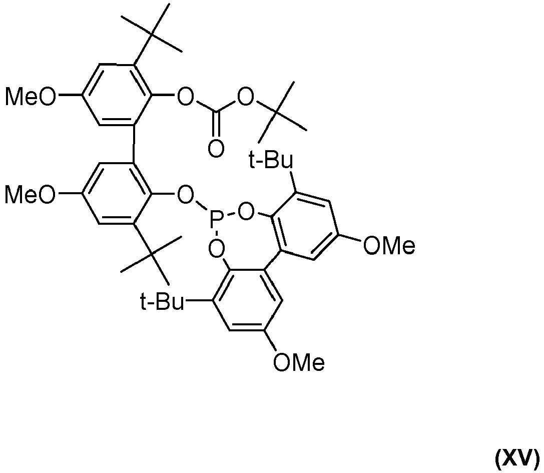

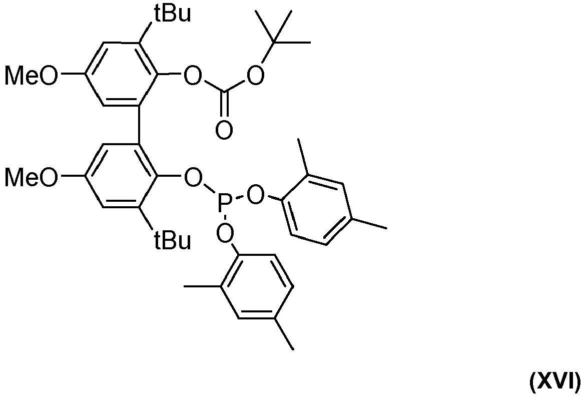

Dem beanspruchten Verfahren können auch Verfahrensschritte vorgelagert sein, wie beispielsweise die Synthese der Liganden. Diese Verfahrensschritte erfolgen dann vor dem Verfahrensschritt a).

Bei einer dem Verfahrensschritt a) vorgelagerten Synthese des Liganden kann das Organomonophosphit nach erfolgter Auskristallisation isoliert werden. Dies geschieht typischerweise durch Abfiltrieren und, optional, Trocknen des abfiltrierten Organomonophsophits. Besonders vorteilhaft ist, dass bestimmte Lösungsmittelkombinationen, die aus der Ligandensynthese resultieren (Acetonitril (ACN), N,N'-Dimethylaminobutan (DMAB) oder Triethylamin (NEt₃)) nach einmaliger Destillation zur Umkristallisation verwendet werden können. Dadurch kann das aus der Synthese verwendete Gemisch erneut eingesetzt werden, was aus ökologischer und wirtschaftlicher Sicht vorteilhaft ist. Weiterhin kann auch auf den Zusatz eines Filtrationshilfsmittels verzichtet werden.

Es handelt sich somit um ein besonders einfaches und effizientes Verfahren. Hierbei ist weiterhin besonders vorteilhaft, dass dieses Verfahren sehr schnell durchführbar ist, d.h. das gereinigte Organomonophosphit nach einer kurzen Reaktionszeit wieder ausfällt bzw. auskristallisiert und das Verfahren somit gute Raum-Zeit-Ausbeuten aufweist. Das ist insbesondere für eine großtechnische Synthese vorteilhaft, da verlängerte Reaktionszeiten sich gleich auf den Preis der Verbindung auswirken. Die gute Möglichkeit eines großtechnischen Einsatzes ist ein wichtiges Kriterium, da der Herstellungsaufwand und damit verbunden die anfallenden Kosten nur so hoch sein dürfen, dass die Rentabilität des Gesamtprozesses weiterhin gewährleistet ist.

Im Folgenden soll die Erfindung anhand von Ausführungsbeispielen näher erläutert werden.

### Allgemeine Arbeitsvorschriften

Der in Zusammenhang mit dieser Erfindung angegebene Gesamtchlorgehalt wird nach Wickbold bestimmt: Probenvorbereitung nach DIN 51408 und Messung per lonenchromatographie nach DIN EN ISO 10304.

Alle nachfolgenden Präparationen wurden mit Standard-Schlenkgefäß-Technik unter Schutzgas durchgeführt. Die Lösungsmittel wurden vor Gebrauch über geeigneten Trocknungsmitteln getrocknet (Purification of Laboratory Chemicals, W. L. F. Armarego (Autor), Christina Chai (Autor), Butterworth Heinemann (Elsevier), 6. Auflage, Oxford 2009).

Die Charakterisierung der Produkte erfolgte mittels NMR-Spektroskopie. Chemische Verschiebungen werden in ppm angegeben.

Die Referenzierung der ³¹P-NMR-Signale erfolgte gemäß: SR_{31P} = SR_{1H} ^{∗} (BF_{31P} / BF_{1H}) = SR_{1H} ^{∗} 0,4048. (Robin K. Harris, Edwin D. Becker, Sonia M. Cabral de Menezes, Robin Goodfellow, and Pierre Granger, Pure Appl. Chem., 2001, 73, 1795-1818; Robin K. Harris, Edwin D. Becker, Sonia M. Cabral de Menezes, Pierre Granger, Roy E. Hoffman and Kurt W. Zilm, Pure Appl. Chem., 2008, 80, 59-84). Die Chlorbestimmung erfolgte als Verbrennung nach Wickbold; mit Probenvorbereitung nach DIN 51408 und Messung per lonenchromatographie nach DIN EN ISO 10304.

### Beispiel 1: Synthese von (XI):

### Reaktionsschema:

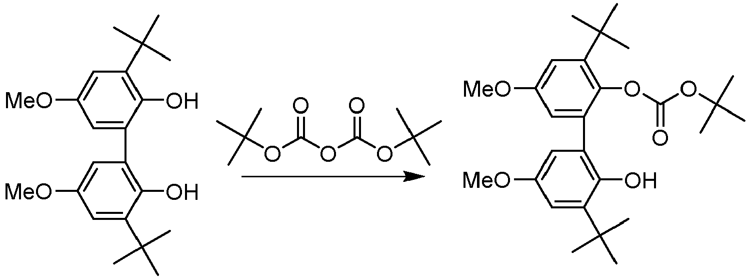

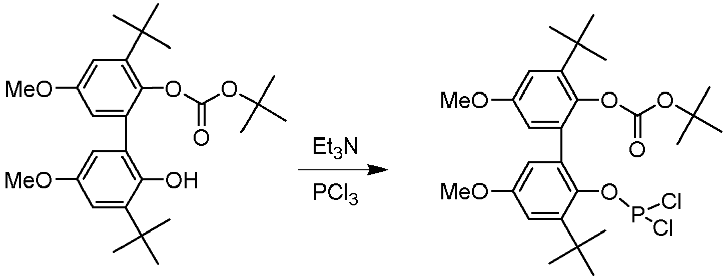

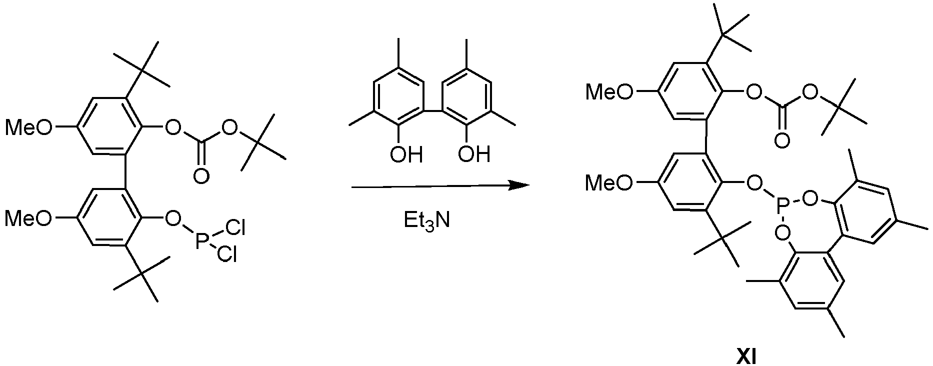

### Einführung der BOC-Gruppe:

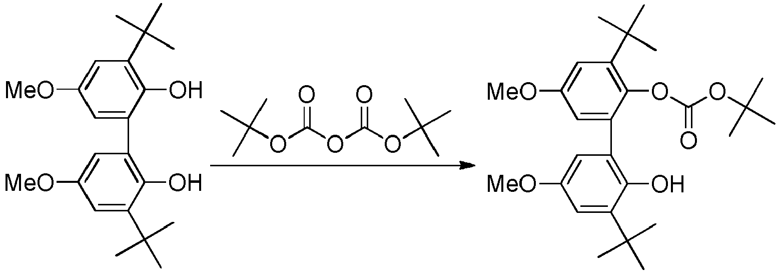

In einem 2L Schlenkkolben werden 400 mmol (143,8 g) des 3,3'-Di-tert.-butyl-5,5'-dimethoxy-[1,1'-biphenyl]-2,2'diol und 40 mmol (4,8 g) *N,N*-Dimethylaminopyridin (DMAP) in 900 mL CH₂Cl₂ gelöst. Anschließend wurden bei Raumtemperatur 400 mmol (88 g) Di-tert-butyldicarbonat in 280 ml CH₂Cl₂ gelöst, in einen 500 ml Tropftrichter überführt und innerhalb einer Stunde bei 32 °C zu der Biphenol/DMAP Lösung getropft. Die Lösung wurde über Nacht bei Raumtemperatur gerührt. Am nächsten Morgen wurde das Lösungsmittel unter vermindertem Druck entfernt. Der leicht wachsartige, rötliche Rückstand wurde mit 800 ml n-Heptan versetzt und über Nacht gerührt. Dabei erhielt man einen weißen Rückstand, der abfiltriert, zweimal mit 50 ml n-Heptan nachgewaschen und dann getrocknet wurde. Das Zielprodukt konnte als weißer Feststoff (161,6 g, 84 %) erhalten werden. ¹H-NMR (Tolul-d₈): 95 % und weitere Verunreinigungen.

### Umsetzung von tert-Butyl-(3,3'-di-tert-butyl-2'-hydroxy-5,5'-dimethoxy-[1,1'-biphenyl]-2-yl)-carbonat mit Phosphortrichlorid:

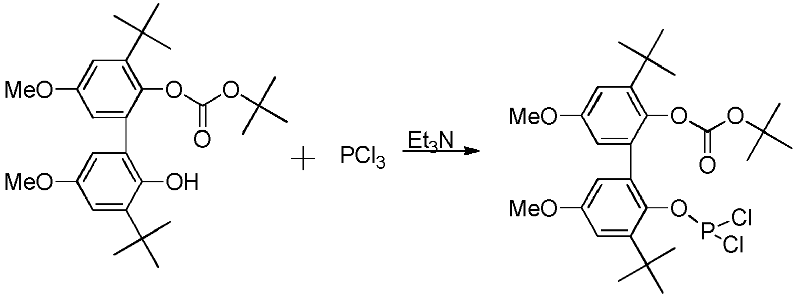

In einem sekurierten 250 ml Schlenkkolben wurden 12 g (0,026 mol) tert-Butyl-(3,3'-di-tert-butyl-2'-hydroxy-5,5'-dimethoxy-[1,1'-biphenyl]-2-yl)-carbonat unter Rühren in 120 ml getrocknetem Toluol und 12,8 ml (0,091 mol) Triethylamin gelöst.

In einem zweiten 500 ml Schlenkkolben wurden zunächst 100 ml getrocknetes Toluol mit 8,1 ml (0,091 mol) Phosphortrichlorid verrührt. Anschließend wurde die Phosphortrichlorid-Toluol-Lösung zu der zuvor hergestellten Carbonat-Amin-Toluol-Lösung innerhalb von 30 Minuten bei Raumtemperatur zugetropft. Nach vollständiger Zugabe wurde für 30 Minuten auf 80 °C erwärmt und über Nacht auf Raumtemperatur abgekühlt.

Am nächsten Morgen wurde die Mischung filtriert, mit 50 ml getrocknetem Toluol nachgewaschen und das Filtrat bis zur Trockne eingeengt. Das Zielprodukt konnte als Feststoff (13,1 g, 89 %) erhalten werden. ³¹P-NMR (202,4 MHz, Toluol-d₈): 203,2 und 203,3 ppm (100 %).

### Umsetzung von tert-Butyl-(3,3'-di-tert-butyl-2'-((dichlorophosphino)oxy)-5,5'-dimethoxy-[1,1'-biphenyl]-2-yl)-carbonat mit 3,3',5,5'-Tetramethyl-(1,1'-biphenyl)-2,2'-diol

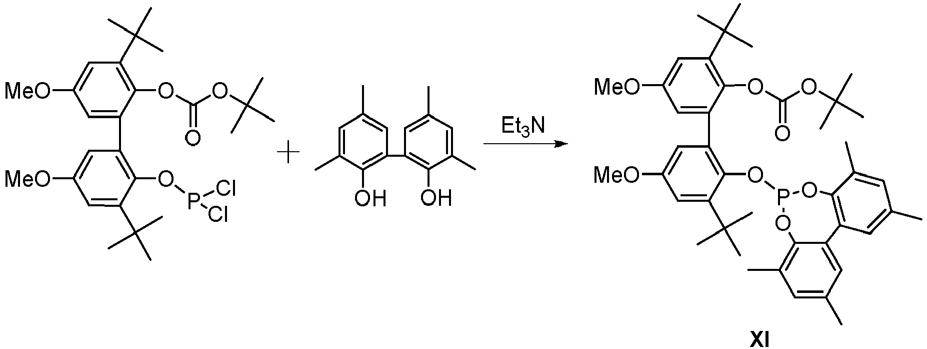

In einem sekurierten 1L Schlenkkolben wurden 24,7 g (0,044 mol) tert-Butyl-(3,3'-di-tert-butyl-2'-((dichlorophosphino)oxy)-5,5'-dimethoxy-[1,1'-biphenyl]-2-yl)-carbonat in 400 ml Acetonitril gelöst. In einem zweiten sekurierten Schlenkkolben (1L) wurden 10,8 g (0,044 mol) 3,3',5,5'-Tetramethyl-(1,1'-biphenyl)-2,2'-diol in 200 ml Acetonitril und 13,1 ml (0,011 mol) getrocknetem Triethylamin unter Rühren gelöst. Anschließend wurde zu der Biphenol-Triethylamin-Lösung langsam die Chlorophosphit-Lösung hinzugetropft und über Nacht gerührt.

Der Ansatz wurde daraufhin filtriert und der Rückstand zweimal mit 15 ml Acetonitril gewaschen. Das Filtrat wurde unter vermindertem Druck eingeengt bis ein Niederschlag ausfiel. Dieser wurde filtriert und getrocknet. Das Zielprodukt (XI) konnte als weißer Feststoff (28,5 g, 87 %) erhalten werden. ³¹P-NMR (202,4 MHz,Toluol-d₈): 139,4 ppm (98,5 %).

### Beispiel 2: Synthese von (XII):

### Umsetzung von tert-Butyl-(3,3'-di-tert-butyl-2'-hydroxy-5,5'-dimethoxy-[1,1'-biphenyl]-2-yl)-carbonat mit 2-Chloro-4,4,5,5-tetraphenyl-1,3,2-dioxaphospholan

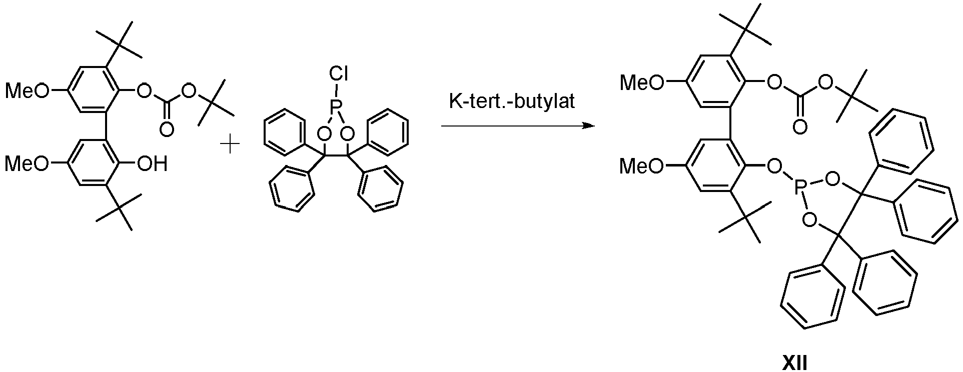

In einem sekurierten 250 ml Schlenkkolben wurden 9,1 g (0,021 mol) 2-Chloro-4,4,5,5-tetraphenyl-1,3,2-dioxaphospholan in 75 ml getrocknetem Toluol aufgelöst.

In einem zweiten Schlenkkolben (250 ml) wurden 9,2 g (0,02 mol) tert-Butyl-(3,3'-di-tert-butyl-2'-hydroxy-5,5'-dimethoxy-[1,1'-biphenyl]-2-yl)-carbonat und 2,3 g (0,02 mol) Kalium-tert.-butylat unter Rühren in 75 ml getrocknetem Toluol gelöst.

Anschließend wurde zu der Chlorophosphit-Lösung langsam bei Raumtemperatur die Carbonat-Kalium-tert.-butylat-Toluol-Mischung getropft und über Nacht bei Raumtemperatur gerührt.

Im Anschluss wurde das Lösungsmittel unter vermindertem Druck entfernt. Der erhaltene Rückstand wurde 5 Stunden in 75 ml getrocknetem Acetonitril gerührt. Der Feststoff wurde filtriert, mit getrocknetem Acetonitril nachgewaschen und getrocknet. Das Zielprodukt (**XII**) konnte als weißer Feststoff (15,3 g, 90 %) erhalten werden. ³¹P-NMR (202,4 MHz, tToluol-d₈): 147,0 ppm (99 %).

### Beispiel 3: Synthese von (XIII):

### Umsetzung von tert-Butyl-(3,3'-di-tert-butyl-2'((dichlorophosphino)oxy)-5,5'-dimethoxy-[1,1'-biphenyl]-2-yl)-carbonat mit 2,2'-Biphenol

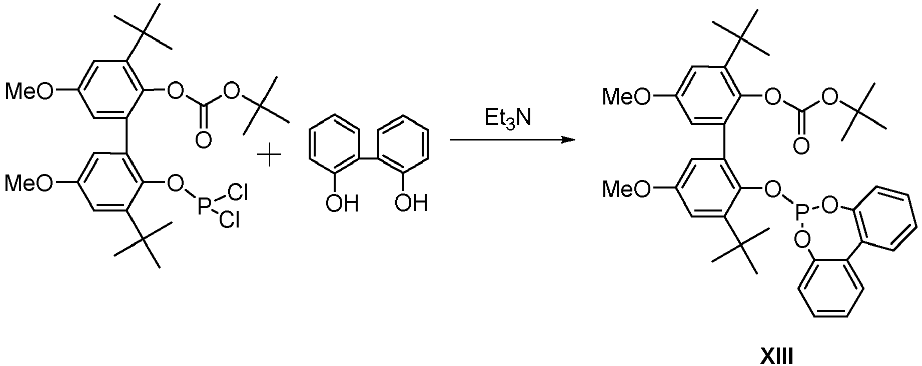

In einem sekurierten 250 ml Schlenkkolben wurden 10,5 g (0,019 mol) tert-Butyl-(3,3'-di-tert-butyl-2'-((dichlorophosphino)oxy)-5,5'-dimethoxy-[1,1'-biphenyl]-2-yl)-carbonat unter Rühren in 50 ml entgastem Acetonitril gelöst.

In einem zweiten sekurierten Schlenkkolben (250 ml) wurden 3,6 g (0,019 mol) 2,2'-Biphenol in 40 ml entgastem Acetonitril und 6,3 ml (0,045 mol) getrocknetem Triethylamin unter Rühren aufgelöst. Anschließend wurde zu der Biphenol-Triethylamin-Lösung langsam bei Raumtemperatur die Chlorophosphit-Mischung hinzugetropft und über Nacht bei Raumtemperatur gerührt. Der erhaltene Feststoff wurde filtriert und getrocknet. Das Zielprodukt (**XIII**) konnte als weißer Feststoff (11,5 g, 90 %) erhalten werden. ³¹P-NMR (202,4 MHz, Toluol-d₈): 146,2 ppm (100%).

### Beispiel 4: Synthese von (XIV):

### Umsetzung von tert-Butyl-(3,3'-di-tert-butyl-2'-((dichlorophosphino)oxy)-5,5'-dimethoxy-[1,1'-biphenyl]-2-yl)-carbonat mit 3,3,5,5-Tetra-tert.-butyl-biphenol

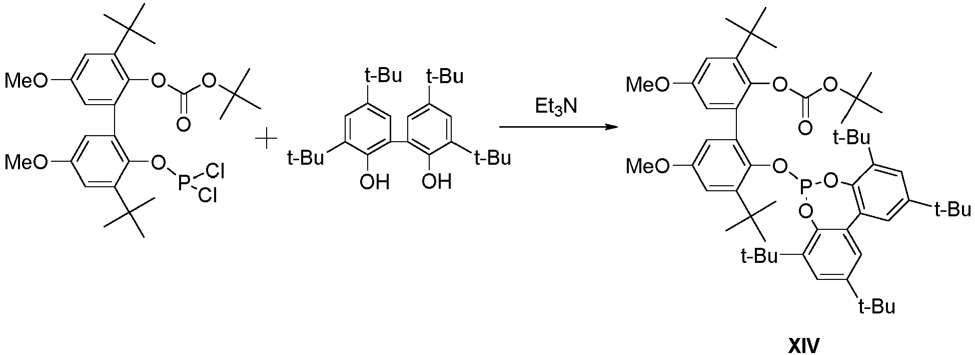

In einem sekurierten 250 ml Schlenkkolben wurden 7.0 g (0,0125 mol) tert-Butyl-(3,3'-di-tert-butyl-2'-((dichlorophosphino)oxy)-5,5'-dimethoxy-[1,1'-biphenyl]-2-yl)-carbonat in 100 ml getrocknetem Acetonitril gelöst.

In einem zweiten sekurierten Schlenkkolben (100 ml) wurden 5.1 g (0,0125 mol) 3,3',5,5'-Tetra-tert.-butyl-biphenol in 60 ml getrocknetem Acetonitril und 4.2 ml (0,03 mol) getrocknetem Triethylamin unter Rühren aufgelöst. Im Anschluss wurde die Biphenol-Triethylamin-Lösung langsam bei Raumtemperatur zu der Chlorophosphit-Lösung getropft und über Nacht gerührt. Ein Teil des Lösungsmittels wurde unter vermindertem Druck entfernt. Der ausgefallene Feststoff wurde filtriert und getrocknet. Das Zielprodukt (**XIV**) konnte als weißer Feststoff (10,2 g, 91 %) erhalten werden. ³¹P-NMR (202,4 MHz, Toluol-d₈): 142,7 ppm (100 %).

### Beispiel 5: Synthese von (XV):

### Umsetzung von tert-Butyl-(3,3'-di-tert-butyl-2'-((dichlorophosphino)oxy)-5,5'-dimethoxy-[1,1'-biphenyl]-2-yl)-carbonat mit 3,3-Di-tert.butyl-5.5-dimethoxy-biphenol

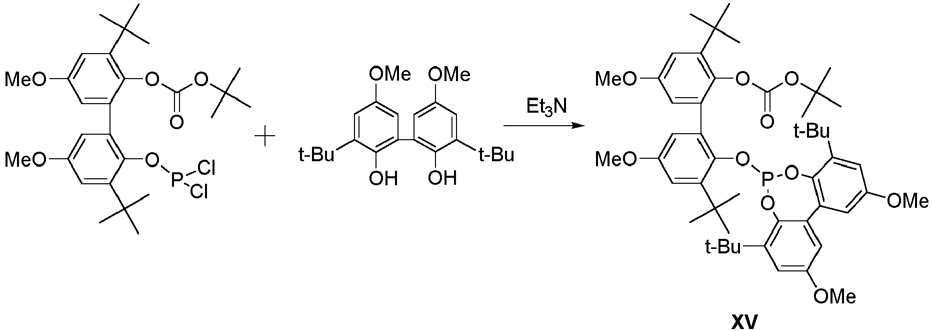

In einem sekurierten 250 ml Schlenkkolben wurden 7 g (0,0125 mol) tert-Butyl-(3,3'-di-tert-butyl-2'-((dichlorophosphino)oxy)-5,5'-dimethoxy-[1,1'-biphenyl]-2-yl)-carbonat in 100 ml getrocknetem Acetonitril gelöst.

In einem zweiten sekurierten Schlenkkolben (100 ml) wurden 4.5 g (0,0125 mol) 3,3-Di-tert.-butyl-5,5-dimethoxy-biphenol in 60 ml getrocknetem Acetonitril und 4.2 ml (0,03 mol) entgastem Triethylamin gelöst. Im Anschluss wurde die Biphenol-Triethylamin-Lösung langsam bei 40 °C zu der Chlorophosphit-Lösung getropft und die Reaktionsmischung wurde auf 80 °C erwärmt und für 6 h bei dieser Temperatur gerührt. Anschließend wurde heiß filtriert.

Ein Teil des Lösungsmittels wurde unter vermindertem Druck entfernt. Der ausgefallene Feststoff wurde filtriert und getrocknet. Das Zielprodukt (**XV**) konnte als weißer Feststoff (10,5 g, 96 %) erhalten werden. ³¹P-NMR (202,4 MHz, Toluol-ds): 140,9 ppm (95,2 %) und weitere Verunreinigungen (weitere Verunreinigungen = P-H-Verbindungen, Oxidverbindungen, noch nicht vollständig umgesetztes Chlorophosphit).

### Beispiel 6: Synthese von (XVI):

### Umsetzung von tert-Butyl-(3,3'-di-tert-butyl-2'-((dichlorophosphino)oxy)-5,5'-dimethoxy-[1,1'-biphenyl]-2-yl)-carbonat mit 2,4-Dimethylphenol

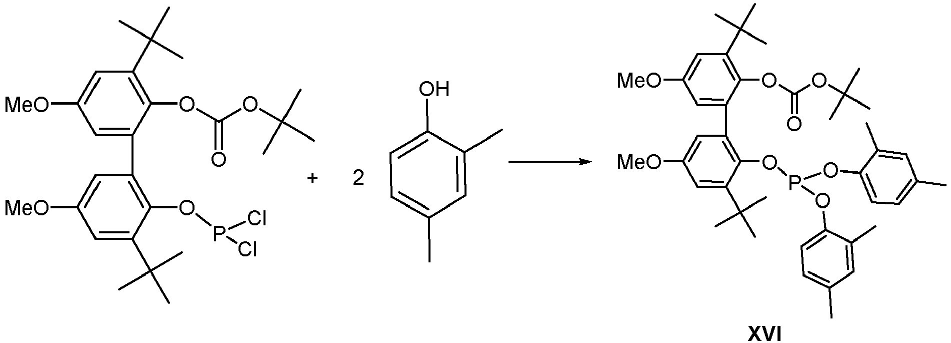

In einem sekurierten 500 ml Schlenkkolben wurden 6,8 g (0,012 mol) tert-Butyl-(3,3'-di-tert-butyl-2'-((dichlorophosphino)oxy)-5,5'-dimethoxy-[1,1'-biphenyl]-2-yl)-carbonat in 100 ml getrocknetem Acetonitril gelöst.

In einem zweiten sekurierten Schlenkkolben (250 ml) wurden 6 g (6 ml; 0,048 mol) 2,4-Dimethylphenol in 100 ml getrocknetem Acetonitril und 5 g (7 ml; 0.059 mol) entgastem Triethylamin gelöst. Im Anschluss wurde die Biphenol-Triethylamin-Lösung langsam bei Raumtemperatur zu der Chlorophosphit-Lösung getropft und über Nacht bei Raumtemperatur gerührt und am nächsten Morgen im Eisbad gekühlt.

Ein Teil des Lösungsmittels wurde unter vermindertem Druck entfernt. Hierbei entstand eine schleimartige Lösung, die nach längerem Trocknen zum Feststoff wurde. Das Zielprodukt (**XVI**) konnte als weißer Feststoff (11,8 g, 62 %) erhalten werden. ³¹P-NMR (202,4 MHz, Toluol-ds): 139,1 ppm (92,8 %) und weitere Verunreinigungen (weitere Verunreinigungen = P-H-Verbindungen, Oxidverbindungen, noch nicht vollständig umgesetztes Chlorophosphit).

### Beispiel 7: Synthese von Bis(2,4-di-tert.-butyl-6-methylphenyl)-ethylphosphit

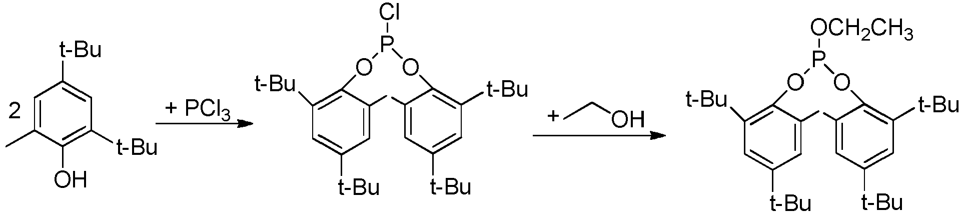

In einem 250 ml Schlenkkolben mit Magnetrührer, Aufsatz, Tropftrichter und Rückflusskühler wurden 22.5 g (0,1 mol) 2,4-Di-tert.-butyl-6-methylphenol (4,6-Di-tert-butyl-ortho-cresol) vorgelegt und zum Schmelzen des Phenols auf 55 °C erwärmt. Zur Schmelze wurden 0,13 ml (0,0015 mol) getrocknetes, entgastes Dimethylformamid zugegeben. Anschließend wurden innerhalb von 2 Stunden 5,7 ml (0,065 mol) Phosphortrichlorid zugetropft. Nach beendeter Zugabe wurde die Reaktionsmischung innerhalb von 3 Stunden auf 140 °C erhitzt und 1 Stunde bei dieser Temperatur gerührt. Dann wurde unter Vakuum 1 Stunde bei 130 °C gerührt. Danach wurde die erhaltene klare gelb-orange Schmelze (= Bis(2,4-di-tert-butyl-6-methyl)-phosphorchloridit) über Nacht auf 80 °C abgekühlt und mit 75 ml entgastem Benzin (80-110 °C) verdünnt. Nach dem Abkühlen der Lösung auf - 5 °C wurden innerhalb von 15 Minuten 9.1 ml (0,0665 mol) entgastes Triethylamin zugegeben. Anschließend wurden innerhalb von 2 Stunden 4.4 ml (0,075 mol) getrocknetes und entgastes Ethanol zugetropft, wobei die Temperatur nicht über 5 °C anstieg. Dieses Gemisch wurde unter Rühren langsam über Nacht auf Raumtemperatur erwärmt.

Am nächsten Morgen wurde das ausgefallene Triethylaminhydrochlorid abfiltriert und das Filtrat unter vermindertem Druck eingeengt. Es entstand ein weißer Rückstand, der in 60 ml entgastem Ethanol umkristallisiert wurde. Das Produkt konnte so in 73,9 %iger Ausbeute (19,03 g) als weißer Feststoff in 98 %iger Reinheit laut LC-MS erhalten werden.

### Chlorreduzierung

### Beispiel 8: Chlorreduzierung von (XI)

### a) Toluol-DMAB/ Acetonitril-DMAB

In einem sekurierten 500 ml Schlenkkolben wurden 10 g Rohligand (**XI**) mit einem Ausgangschlorwert von 5,7 Gew.-% in 40 ml entgastem Toluol und 10 ml *N,N'-*Dimethylaminobutan unter Rühren auf 105 °C erwärmt.

In einem zweiten sekurierten 500 ml Schlenkkolben wurden unter Rühren 90 ml entgastes Acetonitril und 10 ml *N,N'*-Dimethylaminobutan vorgelegt. Im Anschluss wurde innerhalb von ein paar Minuten unter Rühren die Ligand/ Toluol/ Amin - Lösung bei Raumtemperatur in die Acetonitril - Amin Lösung getropft. Um den unlöslichen Feststoffanteil zurückzuhalten, wurde über eine Fritte getropft.

Nach dem Rühren der klaren Lösung für 12 Stunden wurde das Lösungsmittel unter vermindertem Druck entfernt. Im Anschluss wurde der erhaltene Feststoff mit 40 ml entgastem Acetonitril versetzt und bei Raumtemperatur für 12 Stunden gerührt. Dann wurde die Mischung filtriert und getrocknet. Das Produkt konnte in 67 %iger Ausbeute erhalten werden (5,9 g).

Ergebnis NMR: 100 % P 139,3 ppm (Toluol-d8).

Ergebnis Doppelbestimmung Chlor Wickbold: 65 / 65 mg/ kg (ppm)
Zur Genauigkeit wurden die Chlorwerte in einer Doppelbestimmung analysiert.

### b) Toluol-DMAB/ Acetonitril

In einem sekurierten 2 L Schlenkkolben wurden 115,6 g Rohligand (XI) mit einem Ausgangschlorwert von 5,7 Gew.-% in 460 ml entgastem Toluol und 100 ml *N,N'-*Dimethylaminobutan unter Rühren auf 105 °C erwärmt und ca. 10 min. bei dieser Temperatur gerührt.

Zur weiteren Aufarbeitung wurde die Mischung auf Raumtemperatur abgekühlt und über eine Fritte filtriert.

Dann wurde das erhaltene Filtrat mittels verminderten Drucks bis zur Trockne eingeengt. Im Anschluss wurde der erhaltene Feststoff mit 290 ml entgastem Acetonitril versetzt, 15 min. bei 78 °C gerührt, wieder auf Raumtemperatur abgekühlt und bei Raumtemperatur über Nacht gerührt. Am Morgen wurde der Feststoff abfiltriert, mit 50 ml entgastem Acetonitril nachgewaschen, getrocknet. Das Produkt konnte in 61,8 %iger Ausbeute erhalten werden.

Ergebnis NMR: 100 % P 139,3 ppm (Toluol-d8).

Ergebnis Doppelbestimmung Chlor Wickbold: 75/80 mg/kg (ppm)

### c) Toluol-DMAB/ Acetonitril

In einem sekurierten 2 L Schlenkkolben wurden 189,6 g Rohligand (XI) mit einem Ausgangschlorwert von 1,1 Gew.-% in 760 ml entgastem Toluol und 165 ml *N,N'-*Dimethylaminobutan unter Rühren auf 105 °C erwärmt und ca. 10 min. bei dieser Temperatur gerührt.

Zur weiteren Aufarbeitung wurde die Mischung auf Raumtemperatur abgekühlt und über eine Fritte filtriert.

Dann wurde das erhaltene Filtrat mittels verminderten Drucks bis zur Trockne eingeengt, mit 475 ml entgastem Acetonitril versetzt, 15 min. bei 75 °C gerührt und dann über Nacht unter Rühren wieder auf Raumtemperatur abgekühlt. Am Morgen wurde der Feststoff abfiltriert, mit 50 ml entgastem Acetonitril nachgewaschen, getrocknet.

Das Produkt konnte in 86 %iger Ausbeute erhalten werden (160 g).

Ergebnis NMR: 100 % P 139,3 ppm (Toluol-d8).

Ergebnis Chlor Wickbold: <10 mg/ kg (ppm)

### d) Aufarbeitung mittels Toluol/ Methanol/ Triethanolamin (Vergleichsbeispiel)

In einem sekurierten 100 ml Schlenkkolben wurden 10.06 g **(XI)** mit einem Ausgangschlorwert von 1,1 Gew.-% eingewogen und mit 45 ml entgastem Toluol versetzt. Diese Suspension wurde auf 102 °C erwärmt und 20 Minuten rühren gelassen. Dabei löste sich der größte Teil auf. Nur wenige Partikel waren unlöslich. Danach wurde die leicht getrübte Lösung heiß filtriert und das klare Filtrat unter vermindertem Druck bei Raumtemperatur bis zur Trockene eingeengt. Am nächsten Morgen wurden 150 ml entgastes Methanol und 15 ml entgastes Triethanolamin zum Feststoff des eingeengten Filtrats gegeben und 3 h gerührt. Es entstand eine weiße Suspension. Anschließend den Feststoff abfiltriert und getrocknet
Das Produkt konnte in 98%iger Ausbeute (9,8g) erhalten werden.

Ergebnis NMR: 100 % P 139,3 ppm (Toluol-d8).

Ergebnis Chlor Wickbold: 120 mg/ kg (ppm)

### Beispiel 9: Chlorreduzierung von (XV)

### a) Aufarbeitung mittels entgastem Ethanol + 1 % entgastem Wasser + 5 % entgastem DMAB bei 0 °C

Zur Aufarbeitung wurde zum Rohliganden (**XV**) mit einem Ausgangschlorwert von 1,3 Gew.-% unter Rühren zunächst 300 ml entgastes Ethanol und 15 ml entgastes *N,N'*-Dimethylaminobutan gegeben und 2 h gerührt. Danach wurden 3 ml entgastes VE-Wasser zugegeben, auf 0 °C abgekühlt und die Mischung 2 h gerührt. Dann wurde der Feststoff abfiltriert, zweimal mit 40 ml kaltem, entgastem Ethanol nachgewaschen und getrocknet.

Ergebnis Doppelbestimmung Chlor Wickbold: 20/20 mg/kg (ppm)
Ausbeute: 68,01 g entspricht 68,9 %

### b) Aufarbeitung mittels Wasser/ Acetonitril/ N,N'-Dimethylaminobutan (10:10:1)

Zur weiteren Aufarbeitung wurde der Rohligand (**XV**) mit einem Ausgangschlorwert von 1,3 Gew.-% unter Rühren in 40 ml entgastem ACN und 4 ml entgastem *N,N'*-Dimethylamiobutan (5 %) gelöst. Im Anschluss wurde über Nacht bei RT gerührt. Nach ca. 1 h konnten erste Ausfällungen beobachtet werden. Am Morgen wurden zu der Mischung 40 ml entgastes VE-Wasser gegeben. Die Mischung wurde 30 min. gerührt. Im Anschluss wurde der Feststoff abfiltriert, mit wenig entgastem Wasser nachgewaschen und getrocknet.

Ergebnis Doppelbestimmung Chlor Wickbold: 50 / 55 mg/kg (ppm)
Ausbeute 16,6 g entspricht 64,02 %

**Tabelle 1: Chlorwerte**

| | 1. Lösungsmittel | 1. Base | 2. Lösungsmittel | 2. Base | Chlorwert, Mittelwert [ppm] |
|---|---|---|---|---|---|
| 8a) | Toluol | DMAB | Acetonitril | DMAB | 65 |
| 8b) | Toluol | DMAB | Acetonitril | | 77,5 |
| 8c) | Toluol | DMAB | Acetonitril | | < 10 |
| 8d)* | Toluol | | Methanol | Triethanolamin | 120 |
| 9a) | Ethanol | DMAB | H₂O | | 20 |
| 9b) | Acetonitril | DMAB | H₂O | | 52,5 |

| | | | | | |
|---|---|---|---|---|---|
| * Vergleichsbeispiel DMAB: Dimethylaminobutan | | | | | |

Die vorstehenden Beispiele zeige, dass durch den Einsatz von Dimethylaminobutan der Chlorwert auf einen Wert von kleiner 100 ppm gesenkt werden konnte.

## Patentansprüche

1. Verfahren zur Reduktion des Chlorgehalts in einem Organomonophosphit einer der allgemeinen Formeln **I**, **II, III, IV, V, VI, VII, VIII, IX** oder **X**: 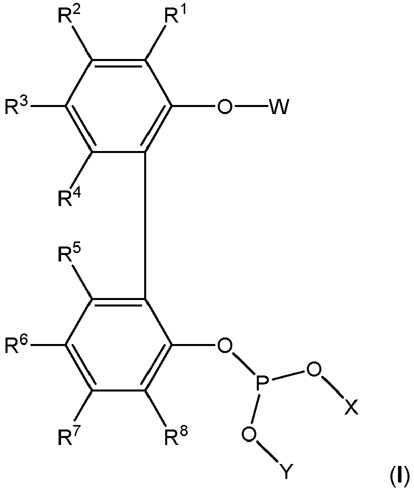 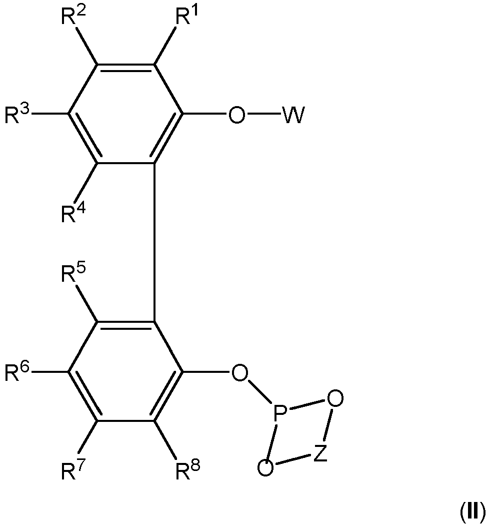 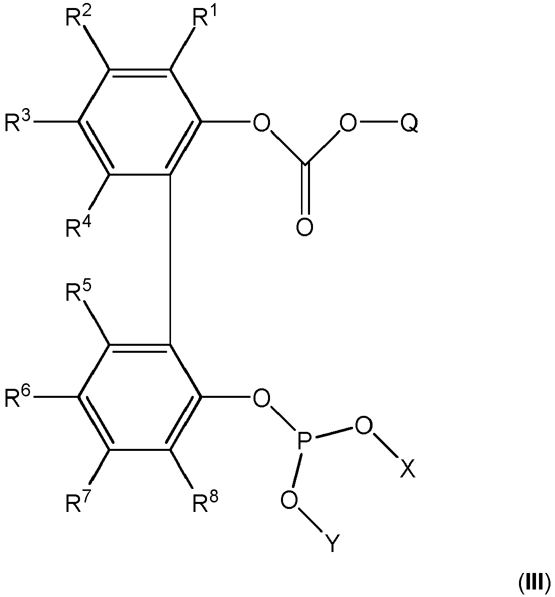 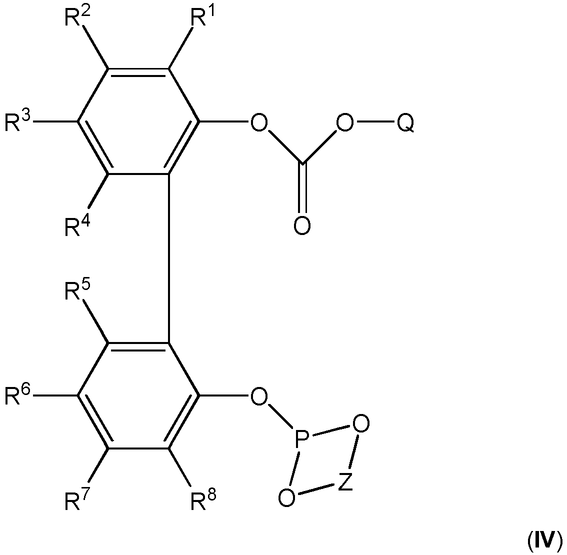 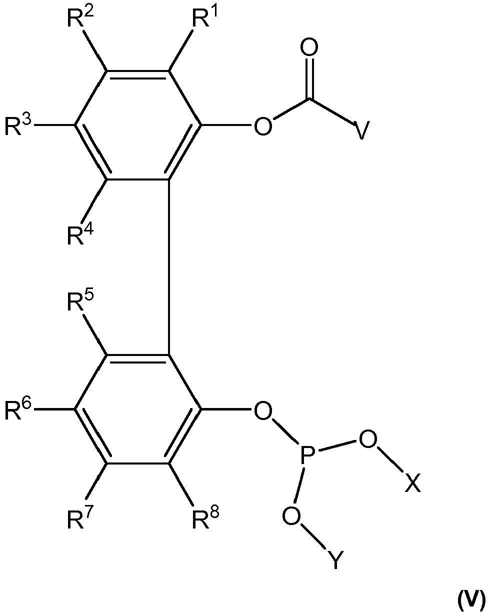 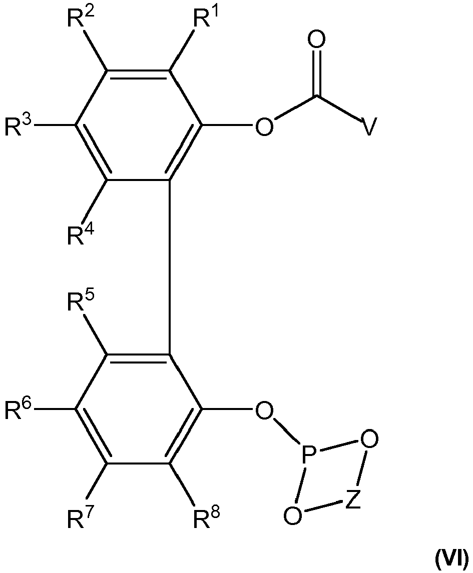 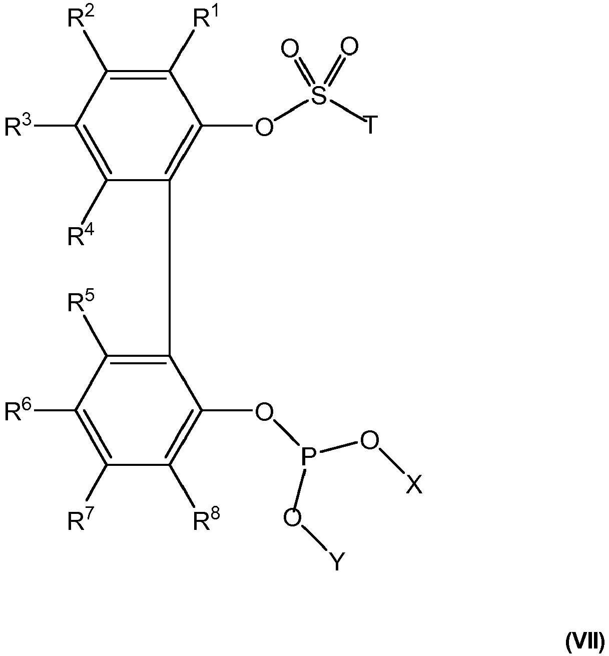 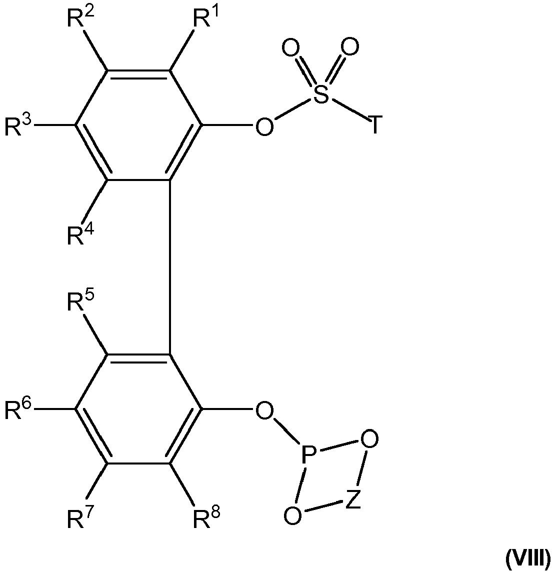 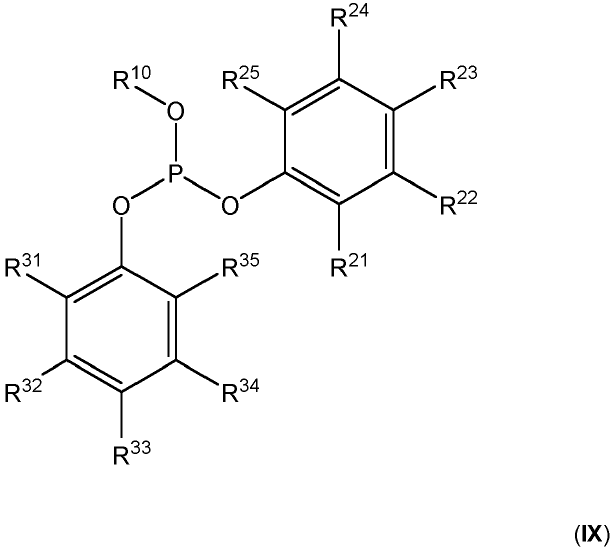 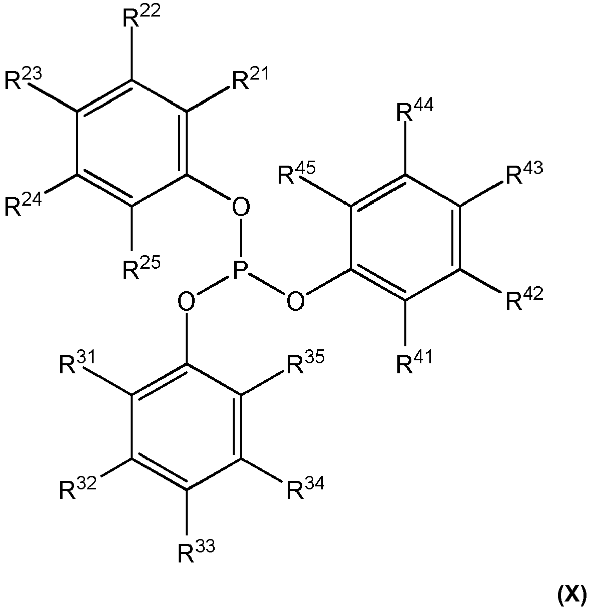 wobei die Reste R¹, R², R³, R⁴, R⁵, R⁶, R⁷, R⁸, R²¹, R²², R²³, R²⁴, R²⁵, R³¹, R³², R³³, R³⁴ R³⁵, R⁴¹, R⁴², R⁴³, R⁴⁴, R⁴⁵ jeweils unabhängig voneinander ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl;
und R¹⁰ für-(C₁-C₁₂)-Alkyl steht;
und T ausgewählt ist aus:
-CH₃, -CF₃, -CH₂C₆H₅;
und Q ausgewählt ist aus:
-(C₁-C₁₂)-Alkyl-, -C(CH₃)₃;
und V ausgewählt ist aus:
-CH₂CH₂COCH₃, -C(CH₃)₃, -C₆H₅;
und W ausgewählt ist aus:
-Me, -CH₂CH₃, -CH₂CH₂CH₃, -CH₂-*cyc*/*o*-C₃H₅, -CH(CH₃)₂, -*cyclo*-C₆H₁₁, -C(CH₃)₃, -CH₂C₆H₅,-CH₂C₆H₃-2,4-(CH₃)₂;
und X und Y jeweils unabhängig voneinander ausgewählt sind aus:
-(C₁-C₁₂)-Alkyl, -(C₆-C₂₀)-Aryl, -(C₆-C₂₀)-Aryl-(C₁-C₁₂)-Alkyl, -(C₁-C₁₂)-Alkyl-(C₆-C₂₀)-Aryl;
und Z ausgewählt ist aus:
-(C₁-C₁₂)-Alkyl-, -(C₆-C₂₀)-Aryl-, -(C₆-C₂₀)-Aryl-(C₆-C₂₀)-Aryl-;
und die genannten Alkyl-, Cycloalkyl-, Aryl- und substituiert sein können;
umfassend die Verfahrensschritte:
a) teilweises oder vollständiges Auflösen des Organomonophosphits in einer ersten Lösung, welche ein erstes Lösungsmittel umfasst, das ausgewählt ist aus Aromaten, Alkoholen, Aceton, Ethylacetat, Acetonitril, Ether, Wasser;
wobei die erste Lösung Dimethylaminobutan oder Triethylamin oder Triethanolamin umfasst;
c) das aufgereinigte Organomonophosphit ausgefällt wird.

2. Verfahren nach Anspruch 1,
welches den zusätzlichen Verfahrensschritt umfasst:
b) Einbringen der ersten Lösung in eine zweite Lösung, die ein zweites Lösungsmittel umfasst, das ausgewählt ist aus Aromaten, C₅-C₁₀-Alkanen, Alkoholen, Aceton, Ethylacetat, Acetonitril, Ether, Wasser.

3. Verfahren nach einem der Ansprüche 1 oder 2,
wobei die erste Lösung Dimethylaminobutan umfasst.

4. Verfahren nach einem der Ansprüche 1 bis 3,
wobei das erste Lösungsmittel ausgewählt ist aus: Ethylacetat, Anisol, ortho-Xylol, Toluol, Aceton, Methanol, Ethanol, Propanol, iso-Propanol, Acetonitril, Wasser.

5. Verfahren nach einem der Ansprüche 1 bis 4,
wobei das erste Lösungsmittel Toluol ist.

6. Verfahren nach einem der Ansprüche 2 bis 5,
wobei das zweite Lösungsmittel ausgewählt ist aus: Ethylacetat, Anisol, ortho-Xylol, Toluol, Aceton, Methanol, Ethanol, Propanol, iso-Propanol, Acetonitril, Tetrahydrofuran, Diethylether, Glykol, C₅-C₁₀-Alkanen, Wasser.

7. Verfahren nach einem der Ansprüche 2 bis 6,
wobei das zweite Lösungsmittel Acetonitril ist.

8. Verfahren nach einem der Ansprüche 2 bis 7,
wobei die zweite Lösung Dimethylaminobutan oder Triethylamin umfasst.

9. Verfahren nach einem der Ansprüche 1 bis 8,
wobei im Verfahrensschritt a) das Organomonophosphit vollständig in der ersten Lösung aufgelöst wird.

10. Verfahren nach einem der Ansprüche 2 bis 9,
wobei die zweite Lösung auf eine Temperatur in dem Bereich von -10 °C bis 80 °C gebracht wird, bevor in Verfahrensschritt b) die erste Lösung in die zweite Lösung eingebracht wird.

11. Verfahren nach einem der Ansprüche 1 bis 10,
wobei das Organomonophosphit eine der allgemeinen Formeln **I, II, III** oder **IV** aufweist:

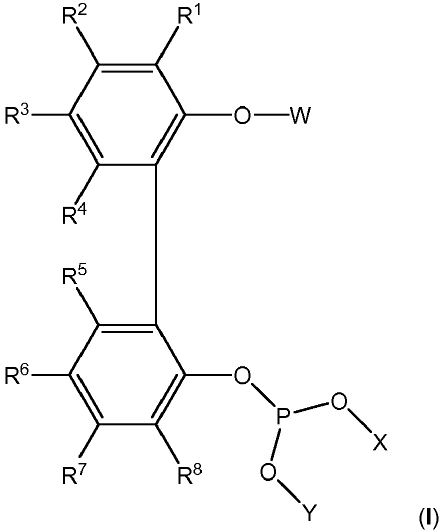

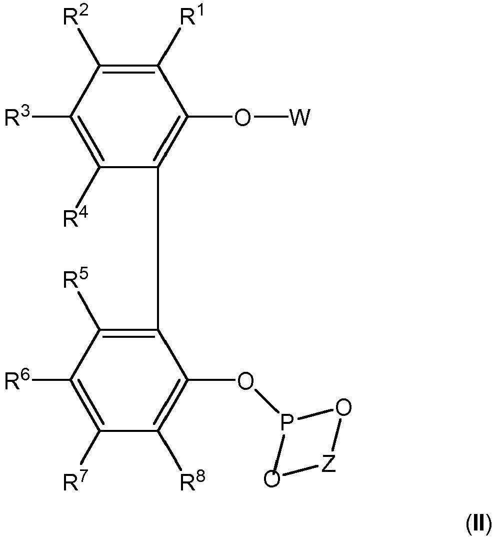

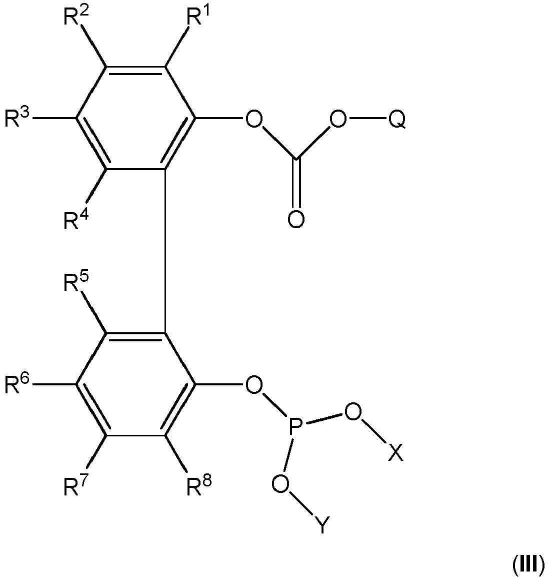

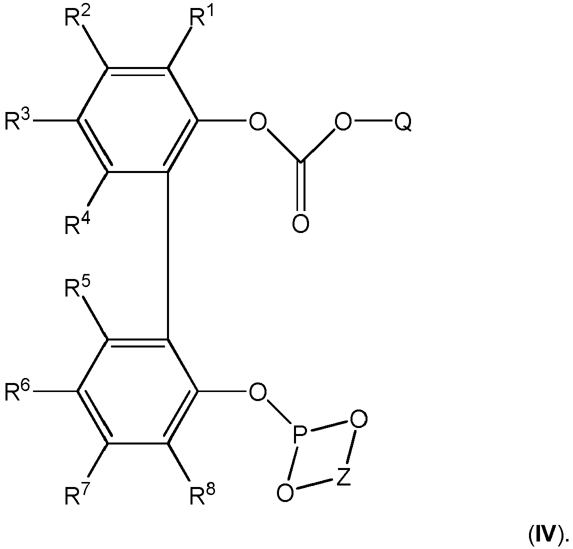

12. Verfahren nach einem der Ansprüche 1 bis 11,
wobei
R¹, R², R³, R⁴, R⁵, R⁶, R⁷, R⁸ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl;
und W für-CH₃ steht;
und Q für -C(CH₃)₃ steht.

13. Verfahren nach einem der Ansprüche 1 bis 12,
wobei Z für: 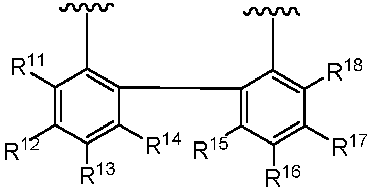 steht und
wobei R¹¹, R¹², R¹³, R¹⁴, R¹⁵, R¹⁶, R¹⁷, R¹⁸ jeweils unabhängig voneinander ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl, -Halogen, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂.

## Claims

1. Process for reducing the chlorine content in an organomonophosphite of one of the general formulae **I, II, III, IV, V, VI, VII, VIII, IX** and **X**: 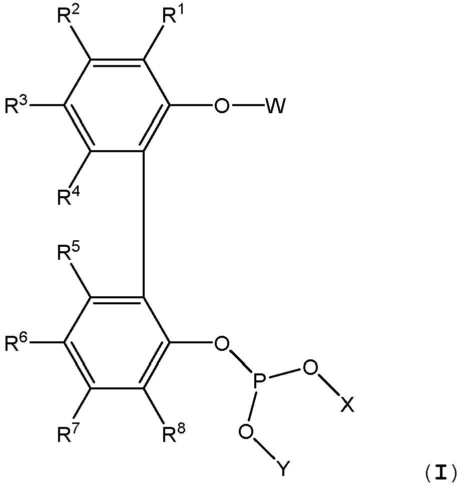 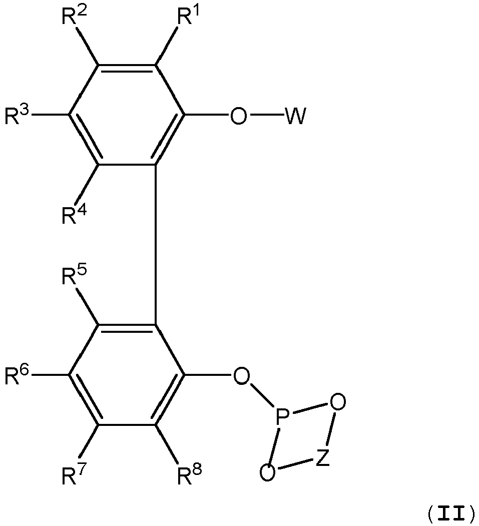 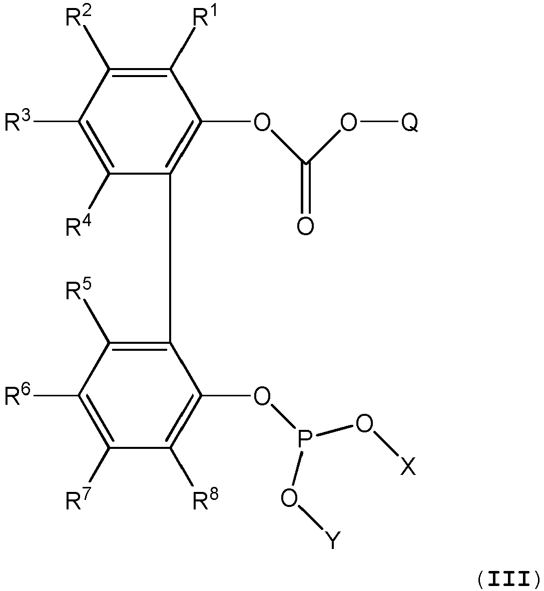 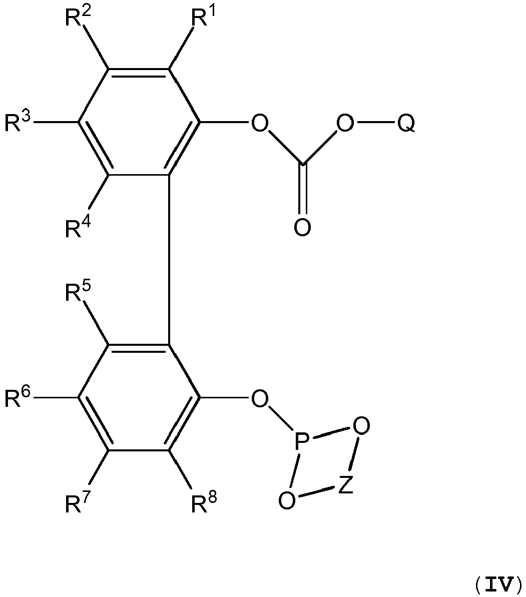 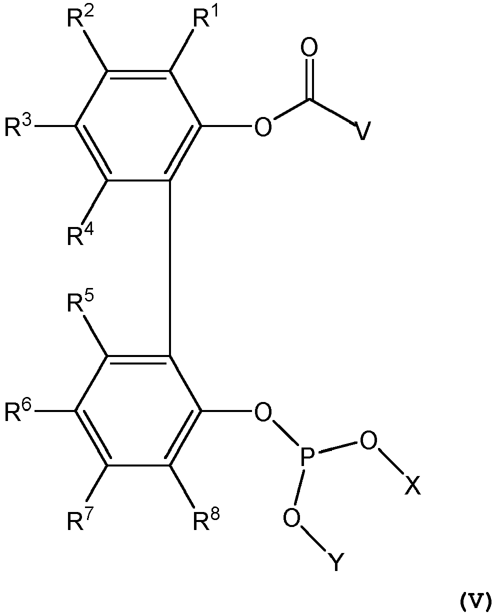 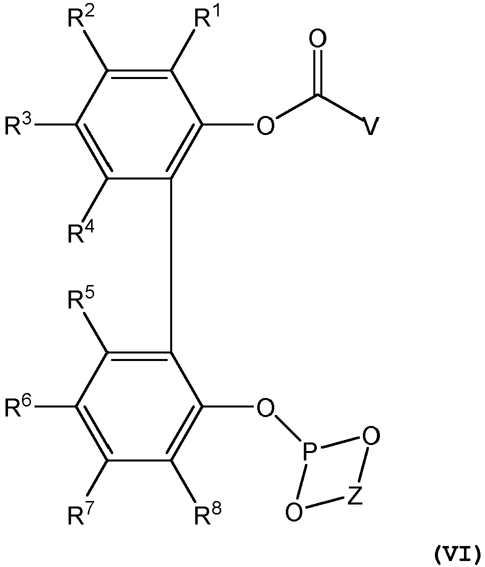 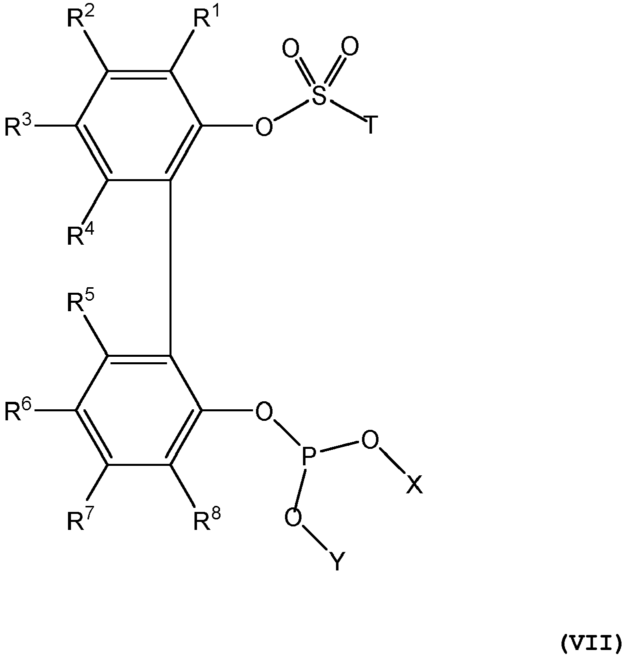 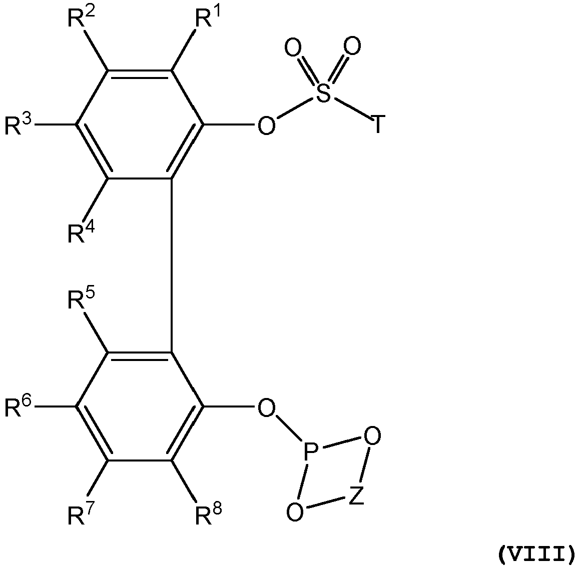 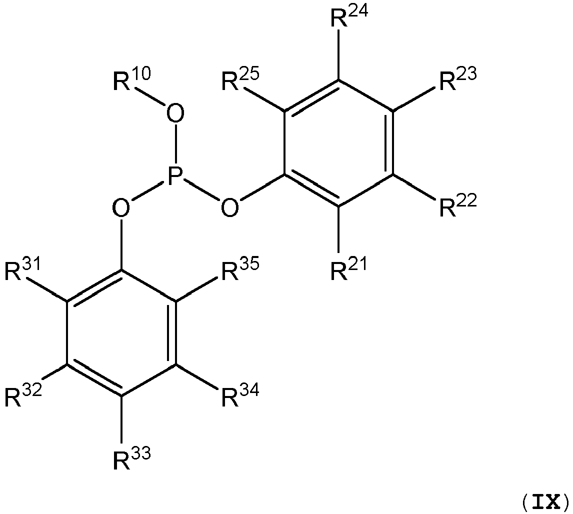 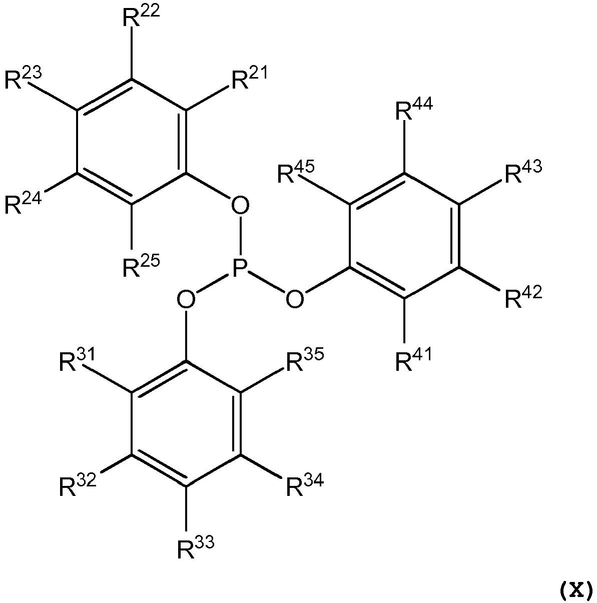 where the radicals R¹, R², R³, R⁴, R⁵, R⁶, R⁷, R⁸, R²¹, R²², R²³, R²⁴, R²⁵, R³¹, R³², R³³, R³⁴, R³⁵, R⁴¹, R⁴², R⁴³, R⁴⁴ and R⁴⁵ are selected each independently from:
-H, - (C₁-C₁₂) -alkyl, -O-(C₁-C₁₂) -alkyl, -O-(C₆-C₂₀) -aryl,-(C₆-C₂₀) -aryl;
and R¹⁰ is - (C₁-C₁₂) -alkyl;
and T is selected from:
-CH₃, -CF₃, -CH₂C₆H₅;
and Q is selected from:
-(C₁-C₁₂)-alkyl-, -C(CH₃)₃;
and V is selected from:
-CH₂CH₂COCH₃, -C(CH₃)₃, -C₆H₅;
and W is selected from:
-Me, -CH₂CH₃, -CH₂CH₂CH₃, -CH₂-*cyclo*-C₃H₅, -CH (CH₃)₂, - *cyclo-*C₆H₁₁*,* -C(CH₃)₃, -CH₂C₆H₅, -CH₂C₆H₃-2, 4-(CH₃)₂;
and X and Y are each independently selected from:
- (C₁₋C₁₂) -alkyl, - (C₆-C₂₀) -aryl, - (C₆-C₂₀) -aryl- (C₁-C₁₂)-alkyl, - (C₁₋C₁₂) -alkyl- (C₆-C₂₀) -aryl;
and Z is selected from:
- (C₁₋C₁₂) -alkyl-, - (C₆-C₂₀) -aryl-, - (C₆-C₂₀) -aryl- (C₆-C₂₀) - aryl-;
and the alkyl, cycloalkyl, and aryl groups mentioned may be substituted;
comprising the process steps of:
a) partly or fully dissolving the organomonophosphite in a first solution comprising a first solvent selected from aromatics, alcohols, acetone, ethyl acetate, acetonitrile, ether, water;
where the first solution comprises dimethylaminobutane or triethylamine or triethanolamine;
c) the purified organomonophosphite is precipitated.

2. Process according to Claim 1,
which comprises the additional process step of:
b) introducing the first solution into a second solution comprising a second solvent selected from aromatics, C₅-C₁₀-alkanes, alcohols, acetone, ethyl acetate, acetonitrile, ether, water.

3. Process according to either of Claims 1 and 2, wherein the first solution comprises dimethylaminobutane.

4. Process according to any of Claims 1 to 3,
wherein the first solvent is selected from: ethyl acetate, anisole, ortho-xylene, toluene, acetone, methanol, ethanol, propanol, isopropanol, acetonitrile, water.

5. Process according to any of Claims 1 to 4,
wherein the first solvent is toluene.

6. Process according to any of Claims 2 to 5,
wherein the second solvent is selected from: ethyl acetate, anisole, ortho-xylene, toluene, acetone, methanol, ethanol, propanol, isopropanol, acetonitrile, tetrahydrofuran, diethyl ether, glycol, C₅-C₁₀-alkanes, water.

7. Process according to any of Claims 2 to 6,
wherein the second solvent is acetonitrile.

8. Process according to any of Claims 2 to 7,
wherein the second solution comprises dimethylaminobutane or triethylamine.

9. Process according to any of Claims 1 to 8,
wherein the organomonophosphite is dissolved fully in the first solution in process step a).

10. Process according to any of Claims 2 to 9,
wherein the second solution is brought to a temperature in the range from -10°C to 80°C before the first solution is introduced into the second solution in process step b).

11. Process according to any of Claims 1 to 10,
wherein the organomonophosphite has one of the general formulae **I, II, III** and **IV**:

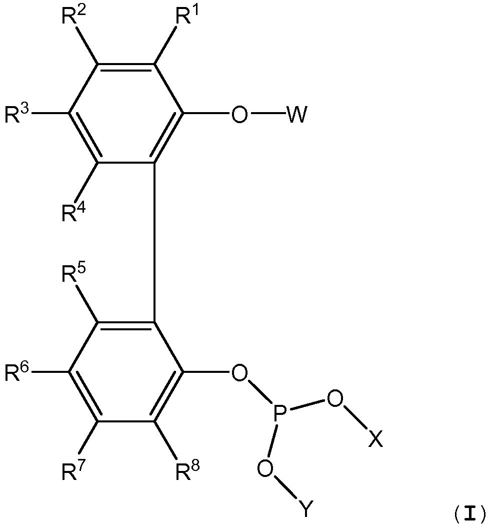

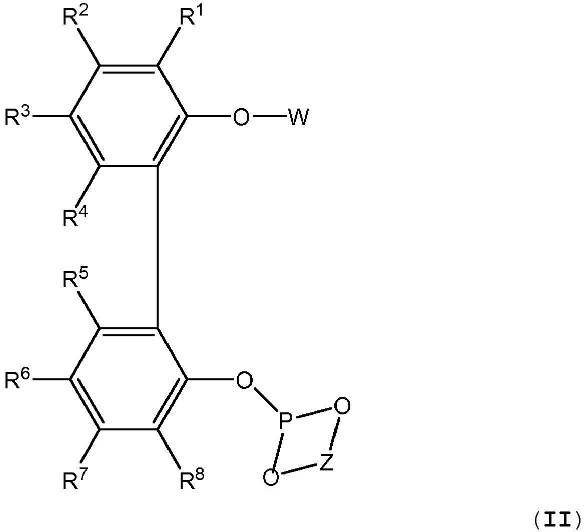

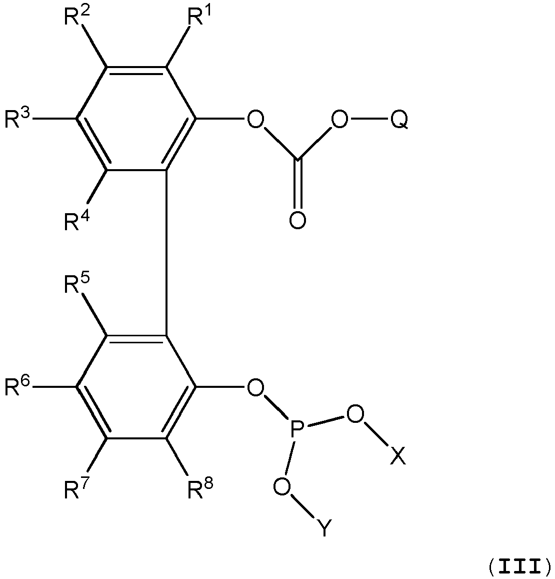

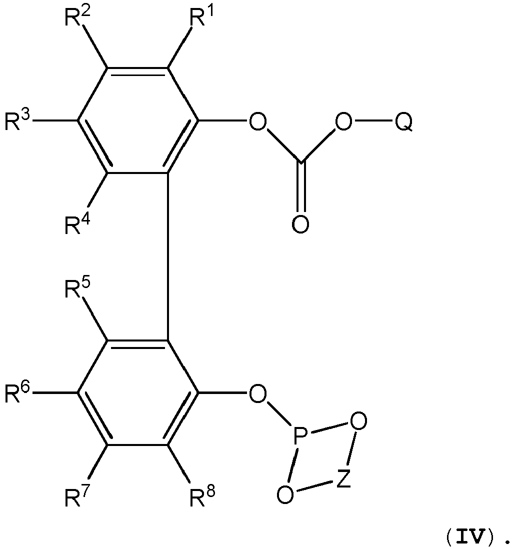

12. Process according to any of Claims 1 to 11,
wherein
R¹, R², R³, R⁴, R⁵, R⁶, R⁷, R⁸ are each independently selected from: -H, - (C₁₋C₁₂) -alkyl, -O- (C₁₋C₁₂) -alkyl, -O-(C₆-C₂₀) -aryl, - (C₆-C₂₀) -aryl;
and W is -CH₃;
and Q is -C(CH₃)₃.

13. Process according to any of Claims 1 to 12, where Z is: 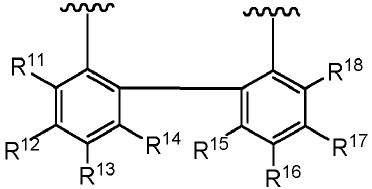 and
where R¹¹, R¹², R¹³, R¹⁴, R¹⁵, R¹⁶, R¹⁷, R¹⁸ are each independently selected from:
-H, - (C₁₋C₁₂) -alkyl, -O- (C₁₋C₁₂) -alkyl, -O- (C₆-C₂₀) -aryl, - (C₆-C₂₀) -aryl, -halogen, -COO- (C₁₋C₁₂) -alkyl, -CONH-(C₁-C₁₂) -alkyl, - (C₆-C₂₀) -aryl-CON [(C₁-C₁₂) -alkyl]₂, -CO- (C₁-C₁₂) -alkyl, -CO- (C₆-C₂₀) -aryl, -COOH, -OH, -SO₃H, -SO₃Na, -NO₂, -CN, -NH₂, -N[(C₁-C₁₂)-alkyl]₂.

## Revendications

1. Procédé de réduction de la teneur en chlore dans un organomonophosphite d'une des formules générales I, II, III, IV, V, VI, VII, VIII, IX ou X : 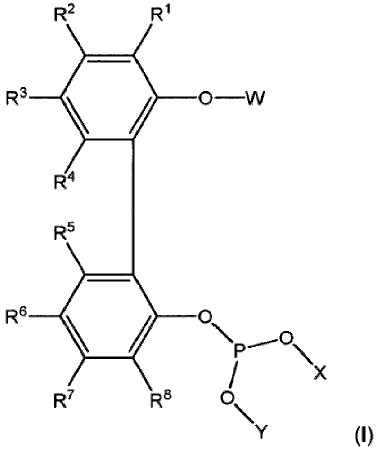 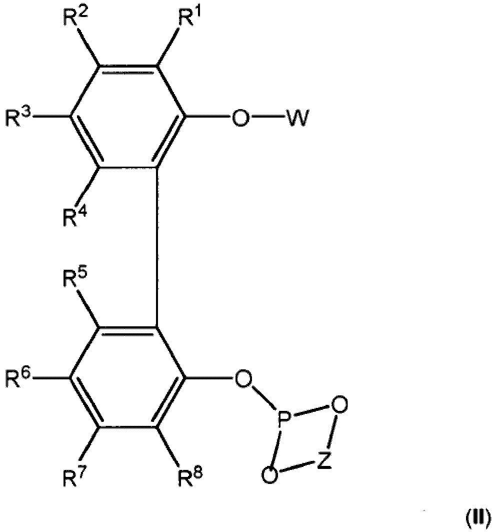 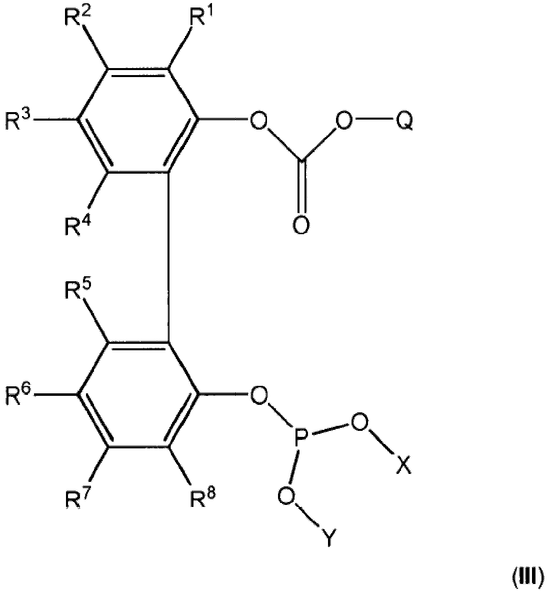 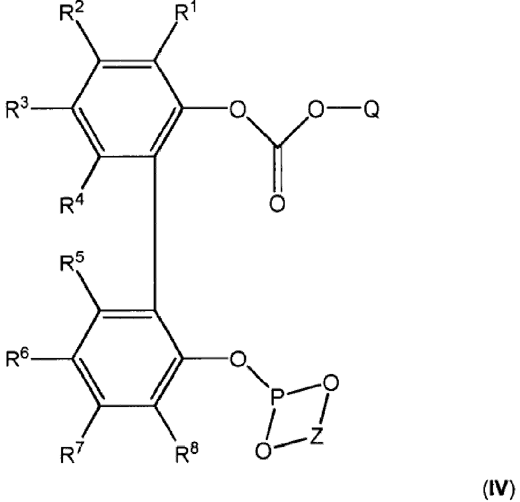 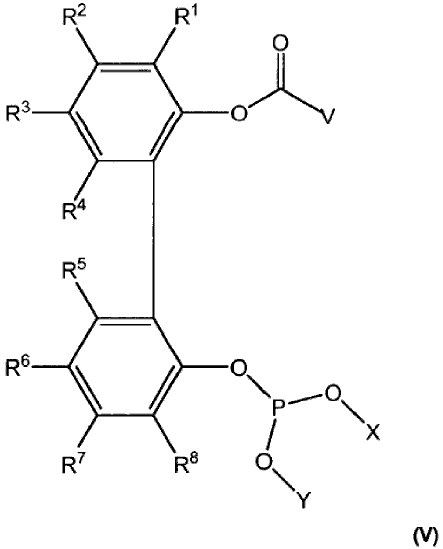 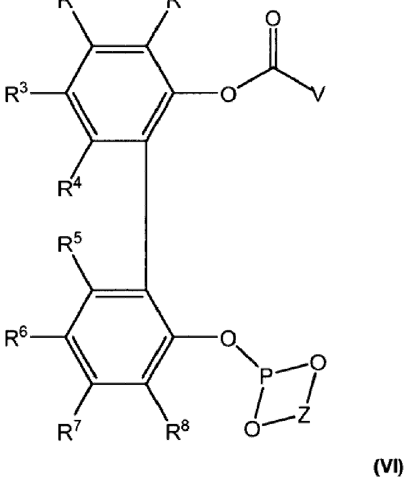 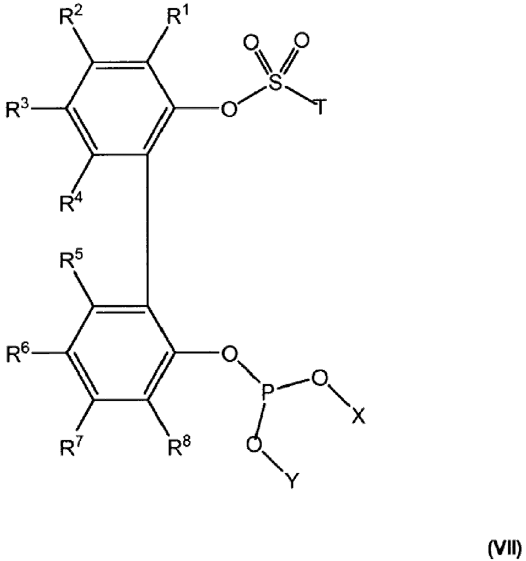 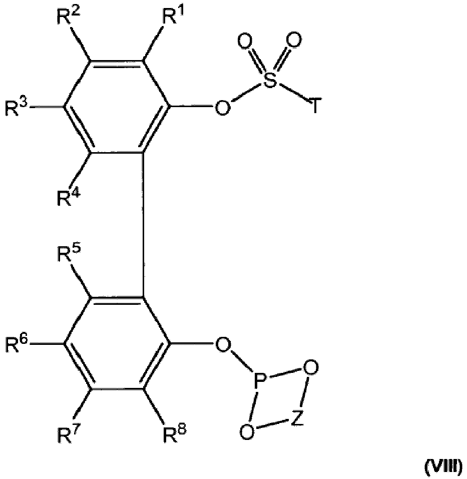 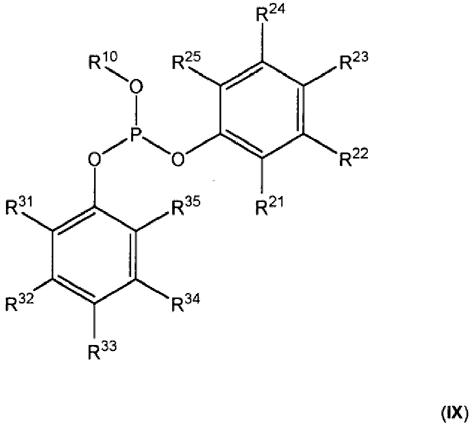 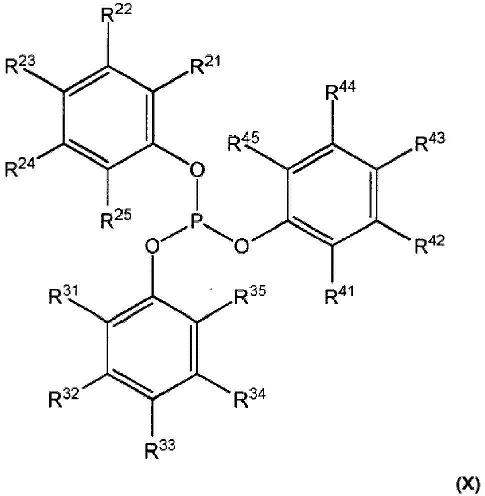 dans lesquelles les radicaux R¹, R², R³, R⁴, R⁵, R⁶, R⁷, R⁸, R²¹, R²², R²³, R²⁴, R²⁵, R³¹, R³², R³³, R³⁴, R³⁵, R⁴¹, R⁴², R⁴³, R⁴⁴, R⁴⁵ sont chacun choisis indépendamment les uns des autres parmi :
-H, alkyle en (C₁-C₁₂) , -O-alkyle en (C₁-C₁₂) , -O-aryle en (C₆-C₂₀) , aryle en (C₆-C₂₀) ;
et R¹⁰ représente alkyle en (C₁₋C₁₂) ;
et T est choisi parmi :
-CH₃, -CF₃, -CH₂C₆H₅ ;
et Q est choisi parmi :
alkyle en (C₁-C₁₂) , -C(CH₃)₃ ;
et V est choisi parmi :
-CH₂CH₂COCH₃, -C(CH₃)₃, -C₆H₅ ;
et W est choisi parmi :
-Me, -CH₂CH₃, -CH₂CH₂CH₃, -CH₂-*cyclo*-C₃H₅, -CH (CH₃)₂,-*cyclo-*C₆H₁₁ -C(CH₃)₃, -CH₂C₆H₅, -CH₂C₆H₃-2, 4-(CH₃)₂;
et X et Y sont chacun choisis indépendamment l'un de l'autre parmi :
alkyle en (C₁-C₁₂), aryle en (C₆-C₂₀), aryle en (C₆-C₂₀)-alkyle en (C₁-C₁₂), alkyle en (C₁₋C₁₂) -aryle en (C₆-C₂₀) ;
et Z est choisi parmi :
alkyle en (C₁-C₁₂) , aryle en (C₆-C₂₀) , aryle en (C₆-C₂₀)-aryle en (C₆-C₂₀) ;
et les groupes alkyle, cycloalkyle et aryle mentionnés peuvent être substitués ;
comprenant les étapes de procédé suivantes :
a) la dissolution partielle ou totale de l'organomonophosphite dans une première solution, qui comprend un premier solvant, qui est choisi parmi les composés aromatiques, les alcools, l'acétone, l'acétate d'éthyle, l'acétonitrile, les éthers, l'eau ;
la première solution comprenant du diméthylaminobutane ou de la triéthylamine ou de la triéthanolamine ;
c) l'organomonophosphite purifié est précipité.

2. Procédé selon la revendication 1, qui comprend l'étape de procédé supplémentaire suivante :
b) l'introduction de la première solution dans une deuxième solution, qui comprend un deuxième solvant, qui est choisi parmi les composés aromatiques, les alcanes en C₅-C₁₀, les alcools, l'acétone, l'acétate d'éthyle, l'acétonitrile, les éthers, l'eau.

3. Procédé selon l'une quelconque des revendications 1 ou 2, dans lequel la première solution comprend du diméthylaminobutane.

4. Procédé selon l'une quelconque des revendications 1 à 3, dans lequel le premier solvant est choisi parmi : l'acétate d'éthyle, l'anisole, l'ortho-xylène, le toluène, l'acétone, le méthanol, l'éthanol, le propanol, l'iso-propanol, l'acétonitrile, l'eau.

5. Procédé selon l'une quelconque des revendications 1 à 4, dans lequel le premier solvant est le toluène.

6. Procédé selon l'une quelconque des revendications 2 à 5, dans lequel le deuxième solvant est choisi parmi : l'acétate d'éthyle, l'anisole, l'ortho-xylène, le toluène, l'acétone, le méthanol, l'éthanol, le propanol, l'iso-propanol, l'acétonitrile, le tétrahydrofurane, l'éther diéthylique, le glycol, les alcanes en C₅-C₁₀, l'eau.

7. Procédé selon l'une quelconque des revendications 2 à 6, dans lequel le deuxième solvant est l'acétonitrile.

8. Procédé selon l'une quelconque des revendications 2 à 7, dans lequel la deuxième solution comprend du diméthylaminobutane ou de la triéthylamine.

9. Procédé selon l'une quelconque des revendications 1 à 8, dans lequel, lors de l'étape de procédé a), l'organomonophosphite est entièrement dissous dans la première solution.

10. Procédé selon l'une quelconque des revendications 2 à 9, dans lequel la deuxième solution est portée à une température dans la plage allant de -10 °C à 80 °C avant l'introduction de la première solution dans la deuxième solution à l'étape de procédé b).

11. Procédé selon l'une quelconque des revendications 1 à 10, dans lequel l'organomonophosphite présente une des formules générales I, II, III ou IV :

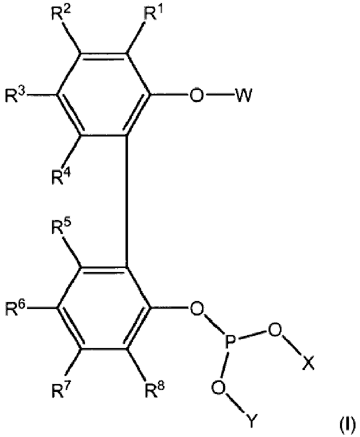

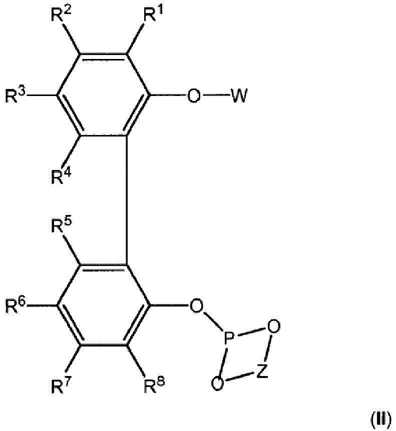

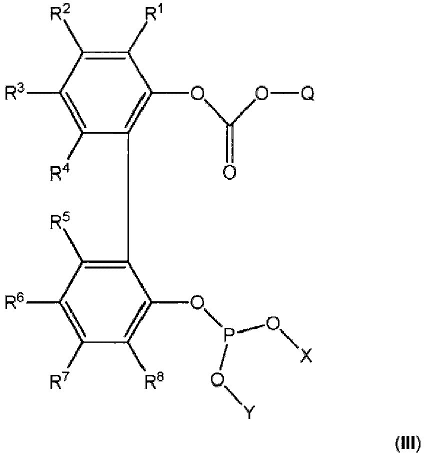

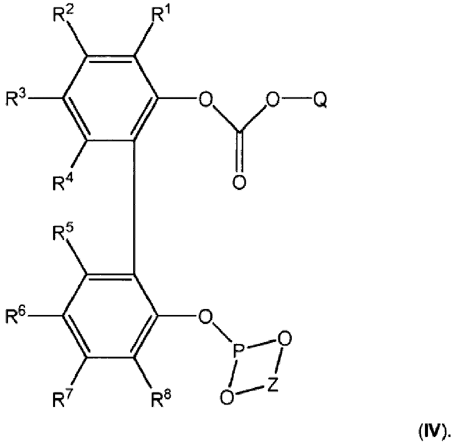

12. Procédé selon l'une quelconque des revendications 1 à 11, dans lequel
R¹, R², R³, R⁴, R⁵, R⁶, R⁷, R⁸ sont chacun choisis indépendamment les uns des autres parmi : -H, alkyle en (C₁-C₁₂) , -O-alkyle en (C₁₋C₁₂) , -O-aryle en (C₆-C₂₀), aryle en (C₆-C₂₀) ;
et W représente -CH₃ ;
et Q représente -C(CH₃)₃.

13. Procédé selon l'une quelconque des revendications 1 à 12, dans lequel Z représente: 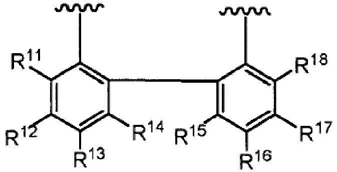 et
dans lequel R¹¹, R¹², R¹³, R¹⁴, R¹⁵, R¹⁶, R¹⁷, R¹⁸ sont chacun choisis indépendamment les uns des autres parmi : -H, alkyle en (C₁-C₁₂) , -O-alkyle en (C₁-C₁₂) ,-O-aryle en (C₆-C₂₀), aryle en (C₆-C₂₀), halogène, -COO-alkyle en (C₁-C₁₂) , -CONH-alkyle en (C₁-C₁₂) , aryle en (C₆-C₂₀) -CON [alkyle en (C₁₋C₁₂) ]₂, -CO-alkyle en (C₁₋C₁₂) , -CO-aryle en (C₆-C₂₀), -COOH, -OH, -SO₃H, -SO₃Na, -NO₂, - CN, -NH₂, -N [alkyle en (C₁-C₁₂)]₂.
